(19) Europäisches Patentamt / European Patent Office / Office européen des brevets

(11) EP 3 162 858 A1

(12) **EUROPEAN PATENT APPLICATION**
published in accordance with Art. 153(4) EPC

(43) Date of publication:
**03.05.2017 Bulletin 2017/18**

(21) Application number: **15811805.9**

(22) Date of filing: **24.06.2015**

(51) Int Cl.:
***C09B 11/28*** (2006.01) ***C09D 11/328*** (2014.01)
***D06P 1/00*** (2006.01) ***D06P 1/46*** (2006.01)
***D06P 1/52*** (2006.01) ***D06P 5/00*** (2006.01)
***D06P 5/20*** (2006.01) ***B41J 2/01*** (2006.01)

(86) International application number:
**PCT/JP2015/068216**

(87) International publication number:
**WO 2015/199135 (30.12.2015 Gazette 2015/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **24.06.2014 JP 2014129598**

(71) Applicant: **FUJIFILM Corporation**
**Tokyo 106-8620 (JP)**

(72) Inventors:
- **FUJIE Yoshihiko**
  **Fujinomiya-shi**
  **Shizuoka 418-8666 (JP)**
- **KOBAYASHI Hiromi**
  **Fujinomiya-shi**
  **Shizuoka 418-8666 (JP)**
- **TATEISHI Keiichi**
  **Fujinomiya-shi**
  **Shizuoka 418-8666 (JP)**

(74) Representative: **Hoffmann Eitle**
**Patent- und Rechtsanwälte PartmbB**
**Arabellastraße 30**
**81925 München (DE)**

(54) **COLORING COMPOSITION FOR DYEING OR TEXTILE PRINTING, INK FOR INKJET TEXTILE PRINTING, METHOD FOR TEXTILE-PRINTING FABRIC, AND DYED OR TEXTILE-PRINTED FABRIC**

(57) Provided are a coloring composition for dyeing or textile printing including a compound having the following structure, an ink for ink jet textile printing including the above-described coloring composition for dyeing or textile printing, a method of printing on fabric, and a dyed or printed fabric. As a result, the color is excellent, the color optical density is high, the fixing properties are excellent, bleeding is reduced, and light fastness is excellent.

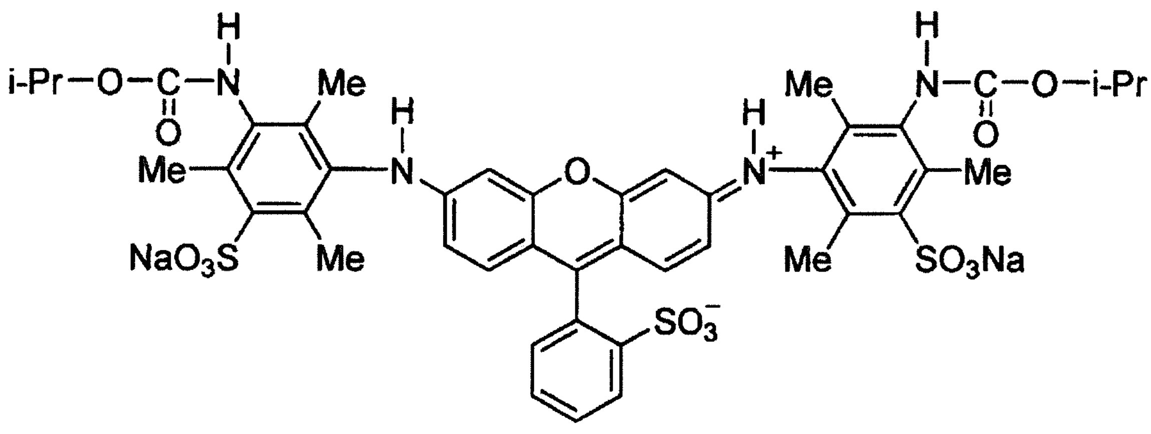



Printed by Jouve, 75001 PARIS (FR)

## Description

## BACKGROUND OF THE INVENTION

1. Field of the Invention

The present invention relates to a coloring composition for dyeing or textile printing, an ink for ink jet textile printing, a method of printing on fabric, and a dyed or printed fabric.

2. Description of the Related Art

In the related art, as a dye for dyeing fabric, for example, an acid dye, a reactive dye, a direct dye, or a disperse dye is used. As a dye for dyeing cellulose fibers such as cotton or viscose rayon, for example, a reactive dye, a direct dye, a sulfur dye, a vat dye, or a naphthol dye is known. As a dye for dyeing polyamide fibers such as silk, wool, or nylon, for example, an acid dye, an acid metal complex dye, an acid mordant dye, or a direct dye is known. Regarding ester fibers such as polyester fiber or cellulose ester fiber, it is known that a disperse dye or a pigment is used for dyeing. In addition, acrylic fibers are generally dyed with a cationic dye. However, some acrylic fibers are dyed with an acid dye.

As dyes, various color dyes can be used. In particular, for magenta, for example, JP4750981B and JP1999-029714A(JP-H11-029714A) describe monoazo dyes.

In addition, as an industrial dyeing method for dyeing fabric, for example, screen printing, roller printing, or transfer printing has been used until now. These methods are dyeing techniques in which a series of steps including, for example, a step of planning a design pattern, an engraving or plate-making step, a step of preparing a printing paste, and a step of preparing a textile are integrated.

On the other hand, ink jet textile printing in which an ink jet method capable of directly supplying a dye to fabric is used has been proposed. Ink jet textile printing has advantageous effects in that, unlike textile printing of the related art, it is not necessary to make a plate and an image having excellent tone characteristics can be rapidly formed. Therefore, there are merits in that, for example, the delivery time can be reduced, many kinds in small quantities can be produced, and a plate-making step is unnecessary. Further, in ink jet textile printing, only an amount of ink required for forming an image is used. Therefore, it can be said that ink jet textile printing is an image forming method having excellent environmental friendliness in that, for example, the amount of waste liquid is less than that in a method of the related art.

JP2939908B describes a method of, using ink jet textile printing, designing a pattern suitable for a three-dimensional shape of a garment and rapidly reproducing the design image on a textile without deterioration.

In addition, JP2002-348502A describes an example in which a xanthene dye is used in an ink jet textile printing method.

On the other hand, JP5451556B describes a xanthene compound which is substituted with an acylamino group. In JP5451556B, a coloring composition including this compound is applied to paper using an ink jet method to form an image, and the saturation, light fastness, and ozone fastness of the image are discussed.

## SUMMARY OF THE INVENTION

However, the dyes described in JP4750981B and JP1999-029714A (JP-H11-029714A) are strongly reddish compared to magenta and are insufficient in vividness. On the other hand, a dye having a xanthene skeleton which is known as, for example, Acid Red 52 or Acid Red 289 exhibits a vivid magenta color, and fabric can be dyed with this dye with a high density. In JP2002-348502A, fabric is printed using Acid Red 289. However, this dye is insufficient in light fastness and wet fastness. In addition, in a case where wet fastness is insufficient in ink jet textile printing, there is a problem in that image bleeding occurs.

The xanthene compound described in JP5451556B which is substituted with an acylamino group has fastness to light and ozone. However, in JP5451556B, issues (in particular, light fastness) arising in a case where the xanthene compound is used for dyeing fabric are not discussed.

Therefore, a coloring composition for dyeing or textile printing, which has excellent fixing properties and with which dyed fabric having excellent performance such as light fastness or wet fastness can be obtained, is required. In particular, in a case where a fine image is printed, there is a problem in that image bleeding occurs in a printing step after a steam treatment step and a water washing step, and currently further improvement is required.

An object of the present invention is to provide a coloring composition for dyeing or textile printing having an excellent color, a high color optical density, reduced bleeding, and excellent light fastness. In addition, another object of the present invention is to provide an ink for ink jet textile printing including the above-described coloring composition for dyeing or textile printing, a method of printing on fabric, and a dyed or printed fabric.

That is, the present invention is as follows.

<1> A coloring composition for dyeing or textile printing comprising a compound represented by the following Formula (1), (2), or (X),

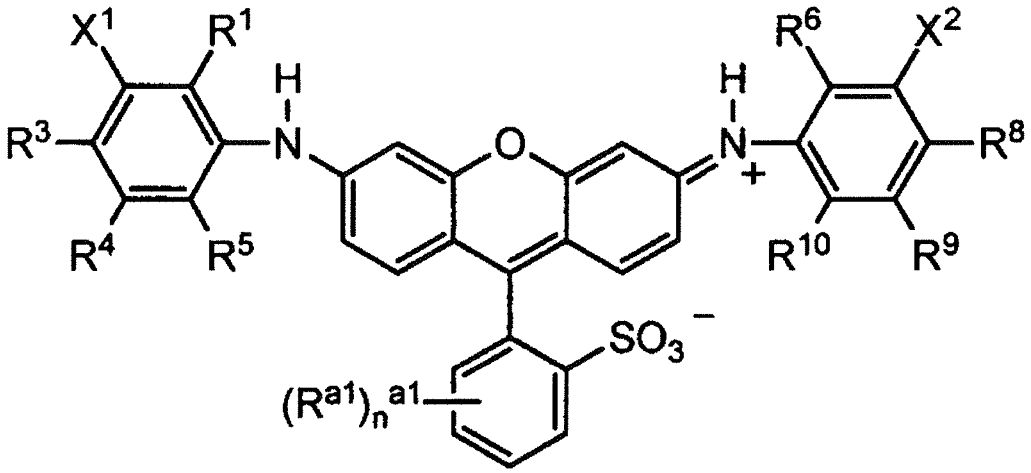

(1)

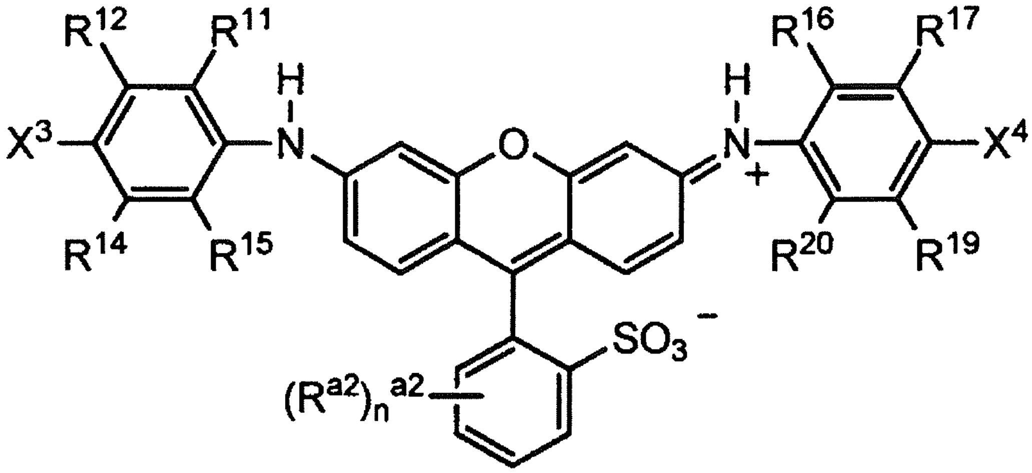

(2)

**Formula (X)** **$D\{SO_3M)_4$**

in Formula (1) or (2), $R^3$, $R^4$, $R^8$, $R^9$, $R^{12}$, $R^{14}$, $R^{17}$, and $R^{19}$ each independently represent a hydrogen atom or a substituent,

$R^1$, $R^5$, $R^6$, $R^{10}$, $R^{11}$, $R^{15}$, $R^{16}$, and $R^{20}$ each independently represent a substituted or unsubstituted alkyl group,

$X^1$, $X^2$, $X^3$, and $X^4$ each independently represent a substituted or unsubstituted alkyl group, a substituted or unsubstituted aryl group, a hydroxyl group, a substituted or unsubstituted alkoxy group, a substituted or unsubstituted aryloxy group, a substituted or unsubstituted heterocyclic oxy group, a substituted or unsubstituted alkylamino group, a substituted or unsubstituted arylamino group, a substituted or unsubstituted heterylamino group, a substituted or unsubstituted acylamino group, a substituted or unsubstituted acyloxy group, a substituted or unsubstituted alkylsulfonyl group, a substituted or unsubstituted arylsulfonyl group, a substituted or unsubstituted aminocarbonyloxy group, a substituted or unsubstituted alkylsulfonylamino group, a substituted or unsubstituted arylsulfonylamino group, a substituted or unsubstituted ureido group, a substituted or unsubstituted acyl group, a carboxyl group, a substituted or unsubstituted carbamoyl group, a substituted or unsubstituted alkoxycarbonyl group, a substituted or unsubstituted aryloxycarbonyl group, a substituted or unsubstituted sulfamoyl group, a mercapto group, a substituted or unsubstituted alkylthio group, a substituted or unsubstituted arylthio group, a substituted or unsubstituted alkoxycarbonylamino group, or a substituted or unsubstituted aryloxycarbonylamino group,

$R^{a1}$ and $R^{a2}$ each independently represent a monovalent substituent, and $n^{a1}$ and $n^{a2}$ each independently represent an integer of 0 to 4,

in a case where $n^{a1}$ and $n^{a2}$ each independently represent an integer of 2 or more, plural $R^{a1}$'s and $R^{a2}$'s may be the same as or different from each other, and

in Formula (X), D represents a residue obtained by removing four hydrogen atoms from the compound represented by Formula (1) or (2),

M represents a hydrogen atom or a counter cation, and

M's may be the same as or different from each other.

<2> The coloring composition for dyeing or textile printing according to <1>,
wherein the compound represented by Formula (1) or (2) is a compound represented by the following Formula (3) or (4),

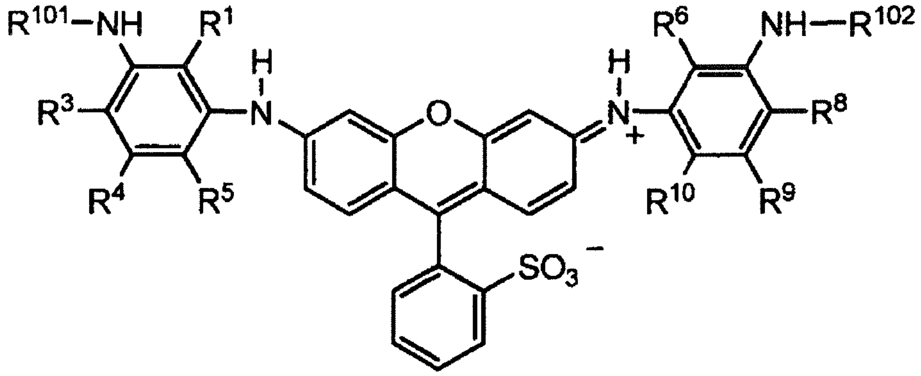

(3)

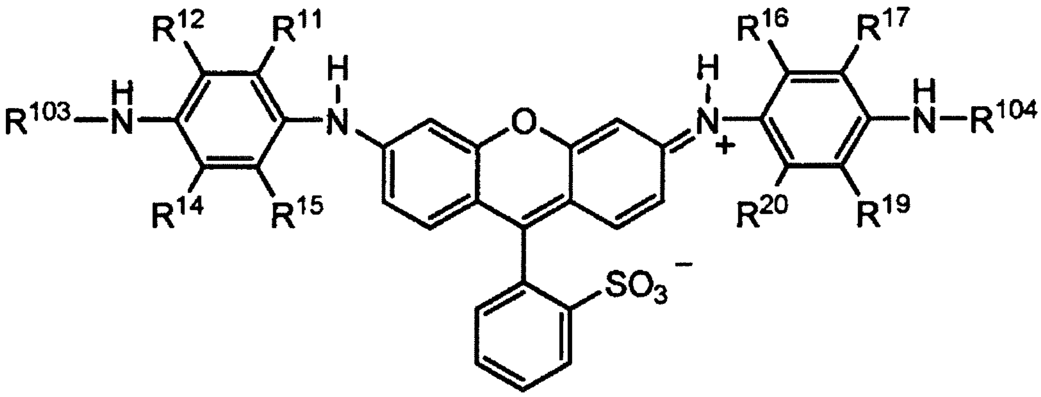

(4)

in Formula (3) or (4), $R^3$, $R^4$, $R^8$, $R^9$, $R^{12}$, $R^{14}$, $R^{17}$, and $R^{19}$ each independently represent a hydrogen atom or a substituent,

$R^1$, $R^5$, $R^6$, $R^{10}$, $R^{11}$, $R^{15}$, $R^{16}$, and $R^{20}$ each independently represent a substituted or unsubstituted alkyl group, and

$R^{101}$, $R^{102}$, $R^{103}$, and $R^{104}$ each independently represent a substituted or unsubstituted alkyl group, a substituted or unsubstituted aryl group, a substituted or unsubstituted heterocyclic group, a substituted or unsubstituted alkylcarbonyl group, a substituted or unsubstituted arylcarbonyl group, a substituted or unsubstituted alkylsulfonyl group, a substituted or unsubstituted arylsulfonyl group, a substituted or unsubstituted alkoxycarbonyl group, a substituted or unsubstituted aryloxycarbonyl group, a substituted or unsubstituted carbamoyl group, a substituted or unsubstituted monoalkylaminocarbonyl group, a substituted or unsubstituted dialkylaminocarbonyl group, a substituted or unsubstituted monoarylaminocarbonyl group, a substituted or unsubstituted diarylaminocarbonyl group, or a substituted or unsubstituted alkylarylaminocarbonyl group.

<3> The coloring composition for dyeing or textile printing according to <2>,
wherein the compound represented by Formula (3) or (4) is a compound represented by the following Formula (5) or (6),

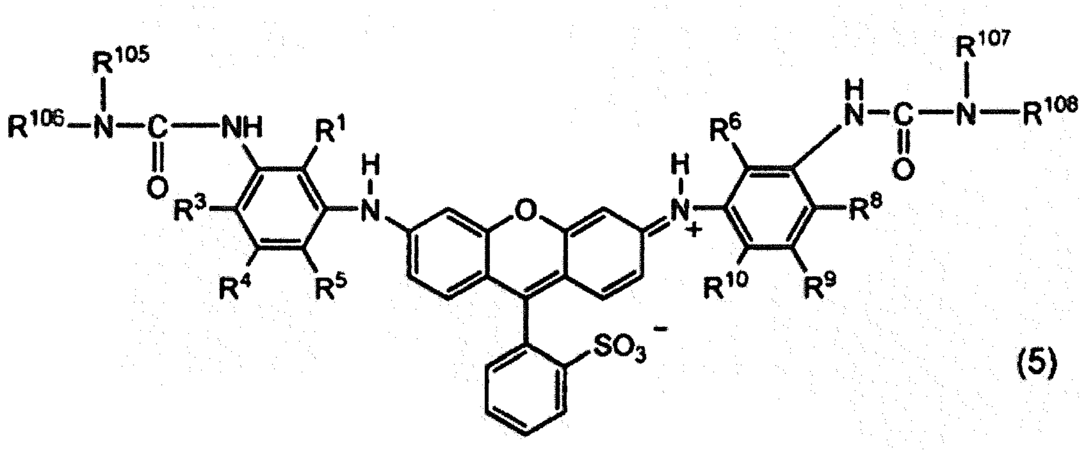

(5)

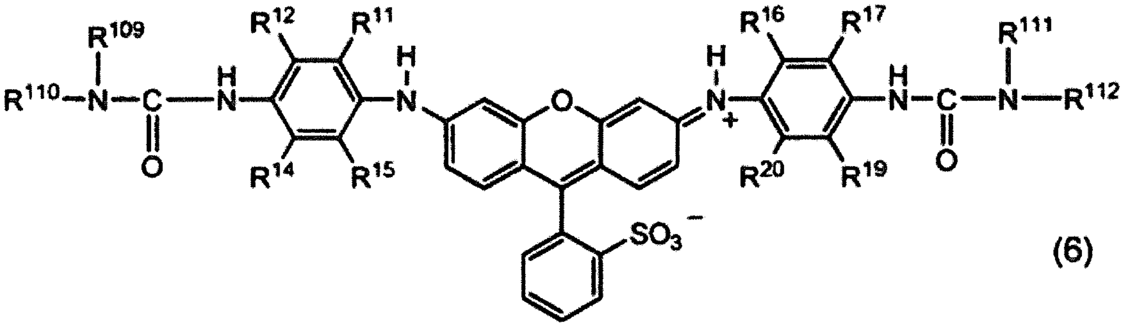

(6)

in Formula (5) or (6), $R^1$, $R^5$, $R^6$, $R^{10}$, $R^{11}$, $R^{15}$, $R^{16}$ , and $R^{20}$ each independently represent a substituted or unsubstituted alkyl group, and

$R^3$, $R^4$, $R^8$, $R^9$, $R^{12}$, $R^{14}$, $R^{17}$, $R^{19}$, $R^{105}$, $R^{106}$ $R^{107}$, $R^{108}$, $R^{109}$, $R^{110}$, $R^{111}$, and $R^{112}$ each independently represent a hydrogen atom or a substituent.

<4> The coloring composition for dyeing or textile printing according to any one of <1> to <3>, wherein $R^4$ and $R^9$ each independently represent a sulfo group.

<5> The coloring composition for dyeing or textile printing according to any one of <1> to <4>, wherein $R^3$ and $R^8$ each independently represent an alkyl group having 1 to 6 carbon atoms.

<6> A textile printing method comprising the following steps (1) to (4):

(1) a step of adjusting a color paste by adding the coloring composition for dyeing or textile printing according to any one of <1> to <5> to a solution including at least a polymer compound and water;
(2) a step of printing the color paste of (1) on fabric;
(3) a step of applying steam to the printed fabric; and
(4) a step of washing the printed fabric with water and drying the washed fabric.

<7> A textile printing method comprising the following steps (11) to (14):

(11) a step of applying a paste including at least a polymer compound and water to fabric;
(12) a step of printing the coloring composition for dyeing or textile printing according to any one of <1> to <5> on the fabric using an ink jet method;
(13) a step of applying steam to the printed fabric; and
(14) a step of washing the printed fabric with water and drying the washed fabric.

<8> The textile printing method according to <6> or <7>, wherein the fabric includes polyamide.

<9> An ink for ink jet textile printing comprising the coloring composition for dyeing or textile printing according to any one of <1> to <5>.

<10> A method of printing on fabric using the ink for ink jet textile printing according to <9> with an ink jet method.

<11> A fabric which is dyed or printed using the coloring composition for dyeing or textile printing according to any one of <1> to <5>.
<12> A fabric which is printed using the method according to <10>.

According to the present invention, a coloring composition for dyeing or textile printing having an excellent color, a high color optical density, reduced bleeding, and excellent light fastness can be provided. In addition, an ink for ink jet textile printing including the above-described coloring composition for dyeing or textile printing, a method of printing on fabric, and a dyed or printed fabric can be provided.

## DESCRIPTION OF THE PREFERRED EMBODIMENTS

Hereinafter, the present invention will be described in detail.
First, specific examples of a substituent in the present invention are defined as a substituent group A.

(Substituent Group A)

Examples of the substituent group A includes a halogen atom, an alkyl group, an aralkyl group, an alkenyl group, an alkynyl group, an aryl group, a heterocyclic group, a cyano group, a hydroxyl group, a nitro group, an alkoxy group, an aryloxy group, a silyloxy group, a heterocyclic oxy group, an acyloxy group, a carbamoyloxy group, an alkoxycarbonyloxy group, an aryloxycarbonyloxy group, an amino group, an acylamino group, an aminocarbonylamino group, an alkoxycarbonylamino group, an aryloxycarbonylamino group, a sulfamoylamino group, an alkyl- or aryl-sulfonylamino group, a mercapto group, an alkylthio group, an arylthio group, a heterocyclic thio group, a sulfamoyl group, an alkyl- or aryl-sulfinyl group, an alkyl- or aryl-sulfonyl group, an acyl group, an aryloxycarbonyl group, an alkoxycarbonyl group, a carbamoyl group, an aryl or heterocyclic azo group, an imido group, a phosphino group, a phosphinyl group, a phosphinyloxy group, a phosphinylamino group, a silyl group, and an ionic hydrophilic group. These substituents may further have a substituent, and examples of this substituent include a group selected from the above-described substituent group A.
Examples of the halogen atom include a fluorine atom, a chlorine atom, a bromine atom, and a iodine atom.
Examples of the alkyl group include a linear, branched, or cyclic substituted or unsubstituted alkyl group. In addition, a cycloalkyl group, a bicycloalkyl group, a tricycloalkyl group and the like having many ring structures are also included. Alkyl groups (for example, an alkoxy group or an alkylthio group) in substituents described below are also included in the examples of the above-described alkyl group.
As the alkyl group, an alkyl group having 1 to 30 carbon atoms is preferable, and examples thereof include a methyl group, an ethyl group, a n-propyl group, an i-propyl group, a t-butyl group, a n-octyl group, an eicosyl group, a 2-chloroethyl group, a 2-cyanoethyl group, and a 2-ethylhexyl group. As the cycloalkyl group, a substituted or unsubstituted cycloalkyl group having 3 to 30 carbon atoms is preferable, and examples thereof include a cyclohexyl group, a cyclopentyl group, and a 4-n-dodecylcyclohexyl group. As the bicycloalkyl group, a substituted or unsubstituted bicycloalkyl group having 5 to 30 carbon atoms is preferable, that is, a monovalent group obtained by removing one hydrogen atom from bicycloalkane having 5 to 30 carbon atoms is preferable, and examples thereof include a bicyclo[1,2,2]heptan-2-yl group and a bicyclo[2,2,2]octan-3-yl group.
Examples of the aralkyl group include a substituted or unsubstituted aralkyl group. As the substituted or unsubstituted aralkyl group, an aralkyl group having 7 to 30 carbon atoms is preferable, and examples thereof include a benzyl group and a 2-phenethyl group.
Examples of the alkenyl group include a linear, branched, or cyclic substituted or unsubstituted alkenyl group. In addition, a cycloalkenyl group and a bicycloalkenyl group are also included.
As the alkenyl group, a substituted or unsubstituted alkenyl group having 2 to 30 carbon atoms is preferable, and examples thereof include a vinyl group, an allyl group, a prenyl group, a geranyl group, and an oleyl group. As the cycloalkenyl group, a substituted or unsubstituted cycloalkenyl group having 3 to 30 carbon atoms is preferable, that is, a monovalent group obtained by removing one hydrogen atom from cycloalkene having 3 to 30 carbon atoms is preferable, and examples thereof include a 2-cyclopenten-1-yl group and a 2-cyclohexen-1-yl group. As the bicycloalkenyl group, a substituted or unsubstituted bicycloalkenyl group can be used. A substituted or unsubstituted bicycloalkenyl group having 5 to 30 carbon atoms is preferable, that is, a monovalent group obtained by removing one hydrogen atom from bicycloalkene having one double bond is preferable, and examples thereof include a bicyclo[2,2,1]hept-2-en-1-yl group and a bicyclo[2,2,2]oct-2-en-4-yl group.
As the alkynyl group, a substituted or unsubstituted alkynyl group having 2 to 30 carbon atoms is preferable, and examples thereof include an ethynyl group, a propargyl group, and a trimethylsilylethynyl group.
As the aryl group, a substituted or unsubstituted aryl group having 6 to 30 carbon atoms is preferable, and examples thereof include a phenyl group, a p-tolyl group, a naphthyl group, a m-chlorophenyl group, an o-hexadecanoylaminophenyl group.

As the heterocyclic group, a monovalent group obtained by removing one hydrogen atom from a 5- or 6-membered substituted or unsubstituted aromatic or nonaromatic heterocyclic compound is preferable, and a 5- or 6-membered aromatic heterocyclic group having 3 to 30 carbon atoms is more preferable, and examples thereof include a 2-furyl group, a 2-thienyl group, a 2-pyrimidinyl group, and a 2-benzothiazolyl group. Examples of the nonaromatic heterocyclic group include a morpholinyl group.

As the alkoxy group, a substituted or unsubstituted alkoxy group alkoxy group having 1 to 30 carbon atoms is preferable, and examples thereof include a methoxy group, an ethoxy group, an isopropoxy group, a t-butoxy group, a n-octyloxy group, and a 2-methoxyethoxy group.

As the aryloxy group, a substituted or unsubstituted aryloxy group having 6 to 30 carbon atoms is preferable, and examples thereof include a phenoxy group, a 2-methylphenoxy group, a 4-t-butylphenoxy group, a 3-nitrophenoxy group, and a 2-tetradecanoylaminophenoxy group.

As the silyloxy group, a substituted or unsubstituted silyloxy group having 0 to 20 carbon atoms is preferable, and examples thereof include a trimethylsilyloxy group and a diphenylmethylsilyloxy group.

As the heterocyclic oxy group, a substituted or unsubstituted heterocyclic oxy group having 2 to 30 carbon atoms is preferable, and examples thereof include a 1-phenyltetrazole-5-oxy group and a 2-tetrahydropyranyloxy group.

As the acyloxy group, a formyloxy group, a substituted or unsubstituted alkylcarbonyloxy group having 2 to 30 carbon atoms, or a substituted or unsubstituted arylcarbonyloxy group having 6 to 30 carbon atoms is preferable, and examples thereof include an acetyloxy group, a pivaloyloxy group, a stearoyloxy group, a benzoyloxy group, and a p-methoxyphenylcarbonyloxy group.

As the carbamoyloxy group, a substituted or unsubstituted carbamoyloxy group having 1 to 30 carbon atoms is preferable, and examples thereof include a N,N-dimethylcarbamoyloxy group, a N,N-diethylcarbamoyloxy group, a morpholinocarbonyloxy group, a N,N-di-n-octylaminocarbonyloxy group, and a N-n-octylcarbamoyloxy group.

As the alkoxycarbonyloxy group, a substituted or unsubstituted alkoxycarbonyloxy group having 2 to 30 carbon atoms is preferable, and examples thereof include a methoxycarbonyloxy group, an ethoxycarbonyloxy group, a t-butoxycarbonyloxy group, and an n-octylcarbonyloxy group.

As the aryloxycarbonyloxy group, a substituted or unsubstituted aryloxycarbonyloxy group having 7 to 30 carbon atoms is preferable, and examples thereof include a phenoxycarbonyloxy group, a p-methoxyphenoxycarbonyloxy group, and a p-n-hexadecyloxyphenoxycarbonyloxy group.

Examples of the amino group include an alkylamino group, an arylamino group, and a heterocyclic amino group. As the amino group, an amino group, a substituted or unsubstituted alkylamino group having 1 to 30 carbon atoms, a substituted or unsubstituted anilino group having 6 to 30 carbon atoms is preferable, and examples thereof include a methylamino group, a dimethylamino group, an anilino group, a N-methyl-anilino group, a diphenylamino group, and a triazinylamino group.

As the acylamino group, a formylamino group, a substituted or unsubstituted alkylcarbonylamino group having 1 to 30 carbon atoms, or a substituted or unsubstituted arylcarbonylamino group having 6 to 30 carbon atoms is preferable, and examples thereof include an acetylamino group, a pivaloylamino group, a lauroylamino group, a benzoylamino group, and a 3,4,5-tri-n-octyloxyphenylcarbonylamino group.

As the aminocarbonylamino group, a substituted or unsubstituted aminocarbonylamino group having 1 to 30 carbon atoms is preferable, and examples thereof include a carbamoylamino group, a N,N-dimethylaminocarbonylamino group, a N,N-diethylaminocarbonylamino group, and a morpholinocarbonylamino group.

As the alkoxycarbonylamino group, a substituted or unsubstituted alkoxycarbonylamino group having 2 to 30 carbon atoms is preferable, and examples thereof include a methoxycarbonylamino group, an ethoxycarbonylamino group, a t-butoxycarbonylamino group, a n-octadecyloxycarbonylamino group, and a N-methyl-methoxycarbonylamino group.

As the aryloxycarbonylamino group, a substituted or unsubstituted aryloxycarbonylamino group having 7 to 30 carbon atoms is preferable, and examples thereof include a phenoxycarbonylamino group, a p-chlorophenoxycarbonylamino group, and a m-n-octyloxyphenoxycarbonylamino group.

As the sulfamoylamino group, a substituted or unsubstituted sulfamoylamino group having 0 to 30 carbon atoms is preferable, and examples thereof include a sulfamoylamino group, a N,N-dimethylaminosulfonylamino group, and a N-n-octylaminosulfonylamino group.

As the alkyl- or aryl-sulfonylamino group, a substituted or unsubstituted alkylsulfonylamino group having 1 to 30 carbon atoms or a substituted or unsubstituted arylsulfonylamino group having 6 to 30 carbon atoms is preferable, and examples thereof include a methylsulfonylamino group, a butylsulfonylamino group, a phenylsulfonylamino group, a 2,3,5-trichlorophenylsulfonylamino group, and a p-methylphenylsulfonylamino group.

As the alkylthio group, a substituted or unsubstituted alkylthio group having 1 to 30 carbon atoms is preferable, and examples thereof include a methylthio group, an ethylthio group, and a n-hexadecylthio group.

As the arylthio group, a substituted or unsubstituted arylthio group having 6 to 30 carbon atoms is preferable,

and examples thereof include a phenylthio group, a p-chlorophenylthio group, and a m-methoxyphenylthio group.

As the heterocyclic thio group, a substituted or unsubstituted heterocyclic thio group having 2 to 30 carbon atoms is preferable, and examples thereof include a 2-benzothiazolylthio group and a 1-phenyltetrazole-5-ylthio group.

As the sulfamoyl group, a substituted or unsubstituted sulfamoyl group having 0 to 30 carbon atoms is preferable, and examples thereof include a N-ethylsulfamoyl group, a N-(3-dodecyloxypropyl)sulfamoyl group, a N,N-dimethylsulfamoyl group, a N-acetylsulfamoyl group, a N-benzoylsulfamoyl group, and a N-(N'-phenylcarbamoyl)sulfamoyl group.

As the alkyl- or aryl-sulfinyl group, a substituted or unsubstituted alkylsulfinyl group having 1 to 30 carbon atoms or a substituted or unsubstituted arylsulfinyl group having 6 to 30 carbon atoms is preferable, and examples thereof include a methylsulfinyl group, an ethylsulfinyl group, a phenylsulfinyl group, and a p-methylphenylsulfinyl group.

As the alkyl- or aryl-sulfonyl group, a substituted or unsubstituted alkylsulfonyl group having 1 to 30 carbon atoms or a substituted or unsubstituted arylsulfonyl group having 6 to 30 carbon atoms is preferable, and examples thereof include a methylsulfonyl group, an ethylsulfonyl group, a phenylsulfonyl group, and a p-methylphenylsulfonyl group.

As the acyl group, a formyl group, a substituted or unsubstituted alkylcarbonyl group having 2 to 30 carbon atoms, a substituted or unsubstituted arylcarbonyl group having 7 to 30 carbon atoms, or a substituted or unsubstituted heterocyclic carbonyl group having 2 to 30 carbon atoms and being bonded to a carbonyl group through a carbon atom is preferable, and examples thereof include an acetyl group, a pivaloyl group, a 2-chloroacetyl group, a stearoyl group, a benzoyl group, a p-n-octyloxyphenylcarbonyl group, a 2-pyridylcarbonyl group, and a 2-furylcarbonyl group.

As the aryloxycarbonyl group, a substituted or unsubstituted aryloxycarbonyl group having 7 to 30 carbon atoms is preferable, and examples thereof include a phenoxycarbonyl group, an o-chlorophenoxycarbonyl group, a m-nitrophenoxycarbonyl group, and a p-t-butylphenoxycarbonyl group.

As the alkoxycarbonyl group, a substituted or unsubstituted alkoxycarbonyl group having 2 to 30 carbon atoms is preferable, and examples thereof include a methoxycarbonyl group, an ethoxycarbonyl group, a t-butoxycarbonyl group, and a n-octadecyloxycarbonyl group.

As the carbamoyl group, a substituted or unsubstituted carbamoyl group having 1 to 30 carbon atoms is preferable, and examples thereof include a carbamoyl group, a N-methylcarbamoyl group, a N,N-dimethylcarbamoyl group, a N,N-di-n-octylcarbamoyl group, and a N-(methylsulfonyl)carbamoyl group.

As the aryl- or heterocyclic azo group, a substituted or unsubstituted arylazo group having 6 to 30 carbon atoms or a substituted or unsubstituted heterocyclic azo group having 3 to 30 carbon atoms is preferable, and examples thereof include a phenylazo group, a p-chlorophenylazo group, and a 5-ethylthio-1,3,4-thiadiazol-2-ylazo group.

As the imido group, for example, a N-succinimido group or a N-phthalimido group is preferable.

As the phosphino group, a substituted or unsubstituted phosphino group having 0 to 30 carbon atoms is preferable, and examples thereof include a dimethylphosphino group, a diphenylphosphino group, and a methylphenoxyphosphino group.

As the phosphinyl group, a substituted or unsubstituted phosphinyl group having 0 to 30 carbon atoms is preferable, and examples thereof include a phosphinyl group, a dioctyloxyphosphinyl group, and a diethoxyphosphinyl group.

As the phosphinyloxy group, a substituted or unsubstituted phosphinyloxy group having 0 to 30 carbon atoms is preferable, and examples thereof include a diphenoxyphosphinyloxy group and a dioctyloxyphosphinyloxy group.

As the phosphinylamino group, a substituted or unsubstituted phosphinylamino group having 0 to 30 carbon atoms is preferable, and examples thereof include a dimethoxyphosphinylamino group and a dimethylaminophosphinylamino group.

As the silyl group, a substituted or unsubstituted silyl group having 0 to 30 carbon atoms is preferable, and examples thereof include a trimethylsilyl group, a t-butyldimethylsilyl group, and a phenyldimethylsilyl group.

Examples of the ionic hydrophilic group include a sulfo group, a carboxyl group, a thiocarboxyl group, a sulfino group, a phosphono group, a dihydroxyphosphino group, and a quaternary ammonium group. Among these, a sulfo group or a carboxyl group is more preferable. In addition, the carboxyl group, the phosphono group, or the sulfo group may be in the form of a salt, and examples of a counter cation which forms a salt with the carboxyl group, the phosphono group, or the sulfo group include an ammonium ion, an alkali metal ion (for example, a lithium ion, a sodium ion, or a potassium ion), and an organic cation (for example, a tetramethylammonium ion, a tetramethylguanidium ion, or tetramethylphosphonium). Among these, a lithium salt, a sodium salt, a potassium salt, or an ammonium salt is preferable, a sodium salt or a mixed salt containing a sodium salt as a major component is more preferable, and a sodium salt is most preferable.

In the present invention, in a case where a compound is a salt, the salt is dissociated and present in an water-soluble ink in the form of ions.

[Coloring Composition for Dyeing or Textile Printing]

A coloring composition for dyeing or textile printing according to the present invention includes a compound represented by the following Formula (1), (2), or (X).

<Compound Represented by Formula (1), (2), or (X)>

First, the compound represented by Formula (1), (2), or (X) will be described.

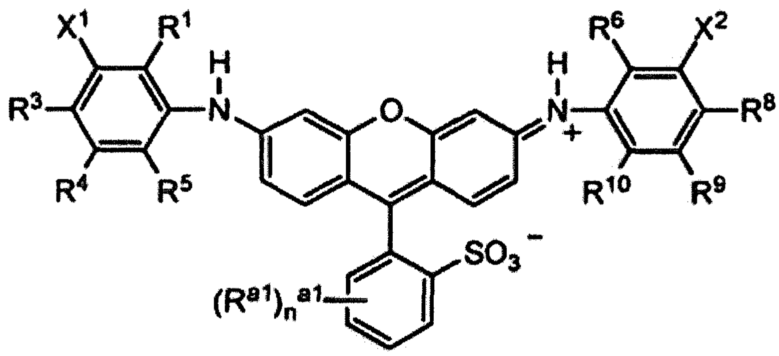

(1)

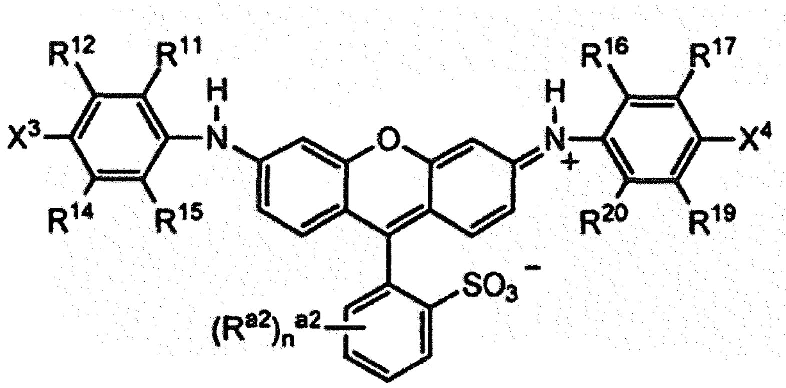

(2)

In Formula (1) or (2), $R^3$, $R^4$, $R^8$, $R^9$, $R^{12}$, $R^{14}$, $R^{17}$, and $R^{19}$ each independently represent a hydrogen atom or a substituent, and $R^1$, $R^5$, $R^6$, $R^{10}$, $R^{11}$, $R^{15}$, $R^{1b}$, and $R^{20}$ each independently represent a substituted or unsubstituted alkyl group. $X^1$, $X^2$, $X^3$, and $X^4$ each independently represent a substituted or unsubstituted alkyl group, a substituted or unsubstituted aryl group, a hydroxyl group, a substituted or unsubstituted alkoxy group, a substituted or unsubstituted aryloxy group, a substituted or unsubstituted heterocyclic oxy group, a substituted or unsubstituted alkylamino group, a substituted or unsubstituted arylamino group, a substituted or unsubstituted heterylamino group, a substituted or unsubstituted acylamino group, a substituted or unsubstituted acyloxy group, a substituted or unsubstituted alkylsulfonyl group, a substituted or unsubstituted arylsulfonyl group, a substituted or unsubstituted aminocarbonyloxy group, a substituted or unsubstituted alkylsulfonylamino group, a substituted or unsubstituted arylsulfonylamino group, a substituted or unsubstituted ureido group, a substituted or unsubstituted acyl group, a carboxyl group, a substituted or unsubstituted carbamoyl group, a substituted or unsubstituted alkoxycarbonyl group, a substituted or unsubstituted aryloxycarbonyl group, a substituted or unsubstituted sulfamoyl group, a mercapto group, a substituted or unsubstituted alkylthio group, a substituted or unsubstituted arylthio group, a substituted or unsubstituted alkoxycarbonylamino group, or a substituted or unsubstituted aryloxycarbonylamino group, $R^{a1}$ and $R^{a2}$ each independently represent a monovalent substituent, and $n^{a1}$ and $n^{a2}$ each independently represent an integer of 0 to 4. In a case where $n^{a1}$ and $n^{a2}$ each independently represent an integer of 2 or more, plural $R^{a1}$'s and $R^{a2}$'s may be the same as or different from each other.

**Formula (X)** $D(SO_3M)_4$

In Formula (X), D represents a residue obtained by removing four hydrogen atoms from the compound represented by Formula (1) or (2).

M represents a hydrogen atom or a counter cation. M's may be the same as or different from each other.

By using the coloring composition for dyeing or textile printing including the compound represented by Formula (1), (2), or (X), the light fastness of dyed fabric is improved. In addition, by using the coloring composition for textile printing including the compound represented by Formula (1), (2), or (X), image bleeding is prevented. The action mechanism for these phenomena is not clear but is thought to be as follows. In particular, in a case where a xanthene compound having hydrogen bonding properties is printed on polyamide, the effect becomes significant. Therefore, the dye and the fabric are strongly fixed to each other due to a hydrogen bond, and water fastness is improved.

In Formula (1) or (2), $R^3$, $R^4$, $R^8$, $R^9$, $R^{12}$, $R^{14}$, $R^{17}$, and $R^{19}$ each independently represent a hydrogen atom or a substituent. In a case where $R^3$, $R^4$, $R^8$, $R^9$, $R^{12}$, $R^{14}$, $R^{17}$, and $R^{19}$ represent a substituent, the substituent is selected from, for example, the substituent group A.

$R^1$, $R^5$, $R^6$, $R^{10}$, $R^{11}$, $R^{15}$, $R^{16}$, and $R^{20}$ each independently represent a substituted or unsubstituted alkyl group and preferably a unsubstituted alkyl group. As the alkyl group, an alkyl group having 1 to 6 carbon atoms is preferable, an alkyl group having 1 to 3 carbon atoms is more preferable, and a methyl group is still more preferable.

In a case where $R^1$, $R^5$, $R^6$, $R^{10}$, $R^{11}$, $R^{15}$, $R^{16}$, and $R^{20}$ represent an alkyl group, a material which is dyed with the coloring composition for textile printing including the compound represented by Formula (1) or (2) can exhibit a vivid magenta color.

In Formula (2), from the viewpoint of raw material availability and synthesis easiness, $R^{12}$, $R^{14}$, $R^{17}$, and $R^{19}$ each independently represent preferably a hydrogen atom, a substituted or unsubstituted alkyl group, a substituted or unsubstituted aryl group, a substituted or unsubstituted alkoxy group, a substituted or unsubstituted aryloxy group, a carboxyl group, or a halogen atom, more preferably a substituted or unsubstituted alkyl group, a substituted or unsubstituted aryl group, a substituted or unsubstituted alkoxy group, and still more preferably a substituted or unsubstituted alkyl group. As the alkyl group, an alkyl group having 1 to 6 carbon atoms is preferable, an alkyl group having 1 to 3 carbon atoms is more preferable, and a methyl group is still more preferable. In addition, in a case each group has a substituent, the substituent is selected from, for example, the substituent group A.

In Formula (1), from the viewpoint of raw material availability, synthesis easiness, light fastness, ozone fastness, printing density, and saturation, $R^4$ and $R^9$ each independently represent preferably a hydrogen atom, a substituted or unsubstituted alkyl group, a substituted or unsubstituted aryl group, a substituted or unsubstituted alkoxy group, a substituted or unsubstituted aryloxy group, a substituted or unsubstituted amino group, a substituted or unsubstituted acylamino group, a substituted or unsubstituted alkoxycarbonylamino group, a substituted or unsubstituted alkylsulfonylamino group, a substituted or unsubstituted arylsulfonylamino group, a substituted or unsubstituted alkylureido group, a substituted or unsubstituted arylureido group, a sulfo group, a carboxyl group, or a halogen atom, more preferably a substituted or unsubstituted acylamino group, a substituted or unsubstituted alkoxycarbonylamino group, a substituted or unsubstituted alkylsulfonylamino group, a substituted or unsubstituted arylsulfonylamino group, a substituted or unsubstituted alkylureido group, a substituted or unsubstituted arylureido group, or a sulfo group, and still more preferably a sulfo group. In addition, in a case each group has a substituent, the substituent is selected from, for example, the substituent group A.

In Formula (1), from the viewpoint of raw material availability and synthesis easiness, $R^3$ and $R^8$ each independently represent preferably a hydrogen atom, a substituted or unsubstituted alkyl group, a substituted or unsubstituted aryl group, a substituted or unsubstituted alkoxy group, a substituted or unsubstituted aryloxy group, a substituted or unsubstituted amino group, a substituted or unsubstituted acylamino group, a substituted or unsubstituted alkoxycarbonylamino group, a substituted or unsubstituted alkylsulfonylamino group, a substituted or unsubstituted arylsulfonylamino group, a substituted or unsubstituted alkylureido group, a substituted or unsubstituted arylureido group, a sulfo group, a carboxyl group, or a halogen atom, more preferably a hydrogen atom, a substituted or unsubstituted alkyl group, or a sulfo group, and still more preferably a substituted or unsubstituted alkyl group. As the alkyl group, an alkyl group having 1 to 6 carbon atoms is preferable, an alkyl group having 1 to 3 carbon atoms is more preferable, and a methyl group is still more preferable. In addition, in a case each group has a substituent, the substituent is selected from, for example, the substituent group A.

In addition, from the viewpoint of solubility in water, it is preferable that at least one of $R^1$, $R^3$, $R^4$, $R^5$, $R^6$, $R^8$, $R^9$ or $R^{10}$ in Formula (1) or at least one of $R^{11}$, $R^{12}$, $R^{14}$, $R^{15}$, $R^{16}$, $R^{17}$, $R^{19}$, or $R^{20}$ in Formula (2) has a carboxyl group, a sulfo group, or an ionic hydrophilic group such as a phosphono group. Examples of a counter cation of the ionic hydrophilic group include a hydrogen atom (proton), an alkali metal cation (lithium, sodium, or potassium), and ammonium. The amount of the compound represented by Formula (1) or (2) dissolved in water is preferably 1 to 70 mass% and more preferably 2 to 50 mass% with respect to the amount of water. The number of ionic hydrophilic groups is preferably 1 to 9 and more preferably 1 to 5.

In Formula (1) or (2), $X^1$, $X^2$, $X^3$, and $X^4$ each independently represent a substituted or unsubstituted alkyl group, a substituted or unsubstituted aryl group, a hydroxyl group, a substituted or unsubstituted alkoxy group, a substituted or unsubstituted aryloxy group, a substituted or unsubstituted heterocyclic oxy group, a substituted or unsubstituted alkylamino group, a substituted or unsubstituted arylamino group, a substituted or unsubstituted heterylamino group, a substituted or unsubstituted acylamino group, a substituted or unsubstituted acyloxy group, a substituted or

unsubstituted alkylsulfonyl group, a substituted or unsubstituted arylsulfonyl group, a substituted or unsubstituted aminocarbonyloxy group, a substituted or unsubstituted alkylsulfonylamino group, a substituted or unsubstituted arylsulfonylamino group, a substituted or unsubstituted ureido group, a substituted or unsubstituted acyl group, a carboxyl group, a substituted or unsubstituted carbamoyl group, a substituted or unsubstituted alkoxycarbonyl group, a substituted or unsubstituted aryloxycarbonyl group, a substituted or unsubstituted sulfamoyl group, a mercapto group, a substituted or unsubstituted alkylthio group, a substituted or unsubstituted arylthio group, a substituted or unsubstituted alkoxycarbonylamino group, or a substituted or unsubstituted aryloxycarbonylamino group.

In a case where $X^1$, $X^2$, $X^3$, and $X^4$ represent a substituted or unsubstituted alkyl group, as the alkyl group, an alkyl group having 1 to 12 carbon atoms is preferable, an alkyl group having 1 to 6 carbon atoms is more preferable, and an alkyl group having 1 to 3 carbon atoms is still more preferable. Examples of the alkyl group include a linear, branched, or cyclic alkyl group. Specifically, a methyl group, an ethyl group, a n-propyl group, an isopropyl group, a n-butyl group, an isobutyl group, a sec-butyl group, a t-butyl group, or a cyclohexyl group is preferable, a methyl group, an ethyl group, or an isopropyl group is more preferable, a methyl group or an ethyl group is still more preferable, and a methyl group is most preferable. The alkyl group may have a substituent, and this substituent is selected from, for example, the substituent group A and is preferably a chlorine atom.

In a case where $X^1$, $X^2$, $X^3$, and $X^4$ represent a substituted or unsubstituted aryl group, as the aryl group, an aryl group having 6 to 14 carbon atoms is preferable, and an aryl group having 6 to 10 carbon atoms is more preferable. Specific examples of the aryl group include a phenyl group and a naphthyl group. Among these, a phenyl group is preferable. The aryl group may have a substituent, and this substituent is selected from, for example, the substituent group A and is preferably a chlorine atom.

In a case where $X^1$, $X^2$, $X^3$, and $X^4$ represent a substituted amino group, a substituted amino group is preferable, and a substituent is selected from, for example, the substituent group A. As the substituent included in the substituted amino group, a substituted or unsubstituted alkylaminocarbonyl group or a substituted or unsubstituted arylaminocarbonyl group is preferable.

In a case where $X^1$, $X^2$, $X^3$, and $X^4$ represent a substituted carbamoyl group, a substituent is selected from, for example, the substituent group A and is preferably an alkyl group.

In a case where $X^1$, $X^2$, $X^3$, and $X^4$ represent a substituted sulfamoyl group, a substituent is selected from, for example, the substituent group A and is preferably an alkyl group.

In a case where $X^1$, $X^2$, $X^3$, and $X^4$ represent a substituted or unsubstituted alkoxy group, a substituted or unsubstituted alkoxycarbonyl group, a substituted or unsubstituted alkylthio group, or a substituted or unsubstituted alkoxycarbonylamino group, in a preferable range of each group, an alkyl group included in each group is in a preferable range in a case where $X^1$, $X^2$, $X^3$, and $X^4$ represent an alkyl group. In a case where each group has a substituent, the substituent is selected from, for example, substituent group A and is preferably an aryl group or a hydroxyl group.

In a case where $X^1$, $X^2$, $X^3$, and $X^4$ represent a substituted or unsubstituted aryloxy group, a substituted or unsubstituted aryloxycarbonyl group, a substituted or unsubstituted arylthio group, or a substituted or unsubstituted aryloxycarbonylamino group, in a preferable range of each group, an aryl group included in each group is in a preferable range in a case where $X^1$, $X^2$, $X^3$, and $X^4$ represent an aryl group. In a case where each group has a substituent, the substituent is selected from, for example, substituent group A and is preferably an alkyl group.

In a case where $X^1$, $X^2$, $X^3$, and $X^4$ represent a substituted or unsubstituted acyl group, in a preferable range of each group, an alkyl group or an aryl group included in each group is in a preferable range in a case where $X^1$, $X^2$, $X^3$, and $X^4$ represent an alkyl group or an aryl group. In a case where the acyl group has a substituent, the substituent is selected from, for example, substituent group A and is preferably a carboxyl group.

$X^1$, $X^2$, $X^3$, and $X^4$ each independently represent preferably a substituted or unsubstituted aryl group, a substituted or unsubstituted aryloxy group, a substituted or unsubstituted heterocyclic oxy group, a substituted or unsubstituted alkylamino group, a substituted or unsubstituted arylamino group, a substituted or unsubstituted heterylamino group, a substituted or unsubstituted acylamino group, a substituted or unsubstituted acyloxy group, a substituted or unsubstituted alkylsulfonyl group, a substituted or unsubstituted arylsulfonyl group, a substituted or unsubstituted aminocarbonyloxy group, a substituted or unsubstituted alkylsulfonylamino group, a substituted or unsubstituted arylsulfonylamino group, a substituted or unsubstituted ureido group, a substituted or unsubstituted acyl group, a substituted or unsubstituted carbamoyl group, a substituted or unsubstituted alkoxycarbonyl group, a substituted or unsubstituted aryloxycarbonyl group, a substituted or unsubstituted alkyloxycarbonylamino group, or a substituted or unsubstituted aryloxycarbonylamino group, and more preferably a substituted or unsubstituted aryl group, a substituted or unsubstituted aryloxy group, a substituted or unsubstituted heterocyclic oxy group, a substituted or unsubstituted alkylamino group, a substituted or unsubstituted arylamino group, a substituted or unsubstituted heterylamino group, a substituted or unsubstituted alkylsulfonyl group, a substituted or unsubstituted arylsulfonyl group, a substituted or unsubstituted aminocarbonyloxy group, a substituted or unsubstituted alkylsulfonylamino group, a substituted or unsubstituted arylsulfonylamino group, a substituted or unsubstituted ureido group, a substituted or unsubstituted carbamoyl group, a substituted or unsubstituted alkyloxycarbonylamino group, a substituted or unsubstituted aryloxycarbonylamino group.

In Formula (1) or (2), $R^{a1}$ and $R^{a2}$ each independently represent a monovalent substituent.

The monovalent substituent represented by $R^{a1}$ and $R^{a2}$ may be selected from, for example, the substituent group A. From the viewpoint of raw material availability and synthesis easiness, a halogen atom, an aryl group, an alkoxy group, an alkyl group, or an acylamino group is preferable, an alkyl group or an acylamino group is more preferable, and an alkyl group is still more preferable. The alkyl group may have a substituent, and examples of the substituent include a halogen atom and a hydroxyl group. However, it is preferable that the alkyl group is an unsubstituted alkyl group.

In Formula (1) or (2), $n^{a1}$ and $n^{a2}$ represent an integer of 0 to 4. From the viewpoint of raw material availability, $n^{a1}$ and $n^{a2}$ represent preferably an integer of 0 to 3, more preferably an integer of 0 to 2, still more preferably 0 or 1, and even still more preferably 0.

In a case where $n^{a1}$ and $n^{a2}$ each independently represent an integer of 2 or more, plural $R^{a1}$'s and $R^{a2}$'s may be the same as or different from each other.

In Formula (X), D represents a residue obtained by removing four hydrogen atoms from the compound represented by Formula (1) or (2).

M represents a hydrogen atom or a counter cation. M's may be the same as or different from each other. Examples of a counter cation of M include an alkali metal cation (for example, a lithium ion, a sodium ion, or a potassium ion) and an ammonium ion. From the viewpoint of synthesis easiness (easy handleability of dye powder), the counter cation of M is preferably an alkali metal cation or an ammonium ion. In addition, the ionic hydrophilic group may have two or more kinds of cations as counter cations.

It is preferable that Formula (1) is represented by the following Formula (3), and it is preferable that Formula (2) is represented by the following Formula (4). That is, it is preferable that the compound represented by Formula (1) or (2) is a compound represented by the following Formula (3) or (4).

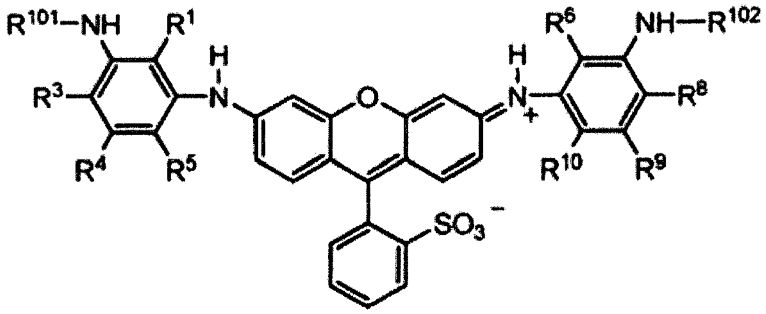

(3)

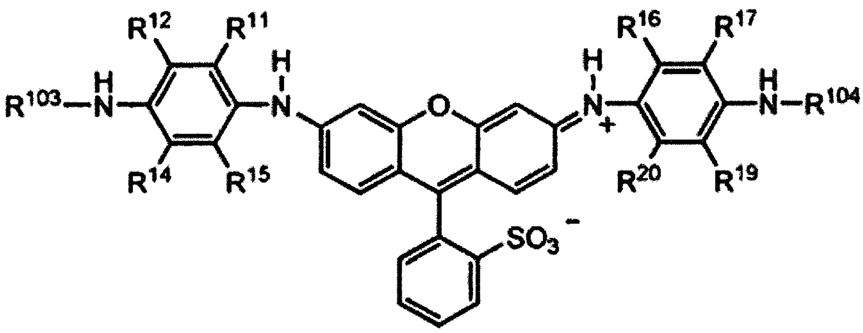

(4)

In Formula (3) or (4), $R^3$, $R^4$, $R^8$, $R^9$, $R^{12}$, $R^{14}$, $R^{17}$, and $R^{19}$ each independently represent a hydrogen atom or a substituent, and $R^1$, $R^5$, $R^6$, $R^{10}$, $R^{11}$, $R^{15}$, $R^{16}$, and $R^{20}$ each independently represent a substituted or unsubstituted alkyl group. $R^{101}$, $R^{102}$, $R^{103}$, and $R^{104}$ each independently represent a substituted or unsubstituted alkyl group, a substituted or unsubstituted aryl group, a substituted or unsubstituted heterocyclic group, a substituted or unsubstituted alkylcarbonyl group, a substituted or unsubstituted arylcarbonyl group, a substituted or unsubstituted alkylsulfonyl group, a substituted or unsubstituted arylsulfonyl group, a substituted or unsubstituted alkoxycarbonyl group, a substituted or unsubstituted aryloxycarbonyl group, a substituted or unsubstituted carbamoyl group, a substituted or unsubstituted monoalkylaminocarbonyl group, a substituted or unsubstituted dialkylaminocarbonyl group, a substituted or unsubstituted monoarylaminocarbonyl group, a substituted or unsubstituted diarylaminocarbonyl group, or a substituted or unsubstituted alkylarylaminocarbonyl group.

Specific examples and preferable ranges of $R^1$, $R^3$, $R^4$, $R^5$, $R^6$, $R^8$, $R^9$, $R^{10}$, $R^{11}$, $R^{12}$, $R^{14}$, $R^{15}$, $R^{16}$, $R^{17}$, $R^{19}$, and $R^{20}$ in Formula (3) or (4) are the same as those of $R^1$, $R^3$, $R^4$, $R^5$, $R^6$, $R^8$, $R^9$, $R^{10}$, $R^{11}$, $R^{12}$, $R^{14}$, $R^{15}$, $R^{16}$, $R^{17}$, $R^{19}$,

and $R^{20}$ in Formula (1) or (2).

In a case where $R^{101}$, $R^{102}$, $R^{103}$, and $R^{104}$ represent a substituted or unsubstituted alkyl group, as the alkyl group, an alkyl group having 1 to 6 carbon atoms is preferable, an alkyl group having 1 to 3 carbon atoms is more preferable, and a methyl group or an ethyl group is still more preferable. In a case where the alkyl group has a substituent, the substituent is selected from, for example, substituent group A and is preferably an aryl group and more preferably a phenyl group.

In a case where $R^{101}$, $R^{102}$, $R^{103}$, and $R^{104}$ represent a substituted or unsubstituted aryl group, as the aryl group, an aryl group having 6 to 14 carbon atoms is preferable, an aryl group having 6 to 10 carbon atoms is more preferable, and a phenyl group is still more preferable. In addition, in a case where the aryl group has a substituent, the substituent is selected from, for example, the substituent group A.

In a case where $R^{101}$, $R^{102}$, $R^{103}$, and $R^{104}$ represent a substituted or unsubstituted heterocyclic group, as the heterocyclic group, a triazine group, a thiazolyl group, a benzothiazolyl group, or a thiadiazolyl group is preferable. In addition, in a case where the heterocyclic group has a substituent, the substituent is selected from, for example, the substituent group A and is preferably a substituted or unsubstituted amino group or a substituted or unsubstituted sulfamoyl group.

In a case where $R^{101}$, $R^{102}$, $R^{103}$, and $R^{104}$ represent a substituted or unsubstituted alkylsulfonyl group, as the alkylsulfonyl group, an alkylsulfonyl group having 1 to 6 carbon atoms is preferable, an alkylsulfonyl group having 1 to 3 carbon atoms is more preferable, and a methylsulfonyl group is still more preferable. In addition, in a case where the alkylsulfonyl group has a substituent, the substituent is selected from, for example, the substituent group A.

In a case where $R^{101}$, $R^{102}$, $R^{103}$, and $R^{104}$ represent a substituted or unsubstituted arylsulfonyl group, as the arylsulfonyl group, an arylsulfonyl group having 6 to 14 carbon atoms is preferable, an arylsulfonyl group having 6 to 10 carbon atoms is more preferable, and a phenylsulfonyl group is still more preferable. In a case where the arylsulfonyl group has a substituent, the substituent is selected from, for example, the substituent group A and is preferably a carboxyl group.

In a case where $R^{101}$, $R^{102}$, $R^{103}$, and $R^{104}$ represent a substituted or unsubstituted alkoxycarbonyl group, it is preferable that the alkoxycarbonyl group is represented by $-COOR^{201}$. Here, $R^{201}$ represents an alkyl group having 1 to 6 carbon atoms, preferably an alkyl group having 1 to 4 carbon atoms, and more preferably an isopropyl group. In addition, in a case where the alkoxycarbonyl group has a substituent, the substituent is selected from, for example, the substituent group A.

In a case where $R^{101}$, $R^{102}$, $R^{103}$, and $R^{104}$ represent a substituted or unsubstituted aryloxycarbonyl group, it is preferable that the aryloxycarbonyl group is represented by $-COOR^{202}$. Here, $R^{202}$ represents an aryl group having 6 to 14 carbon atoms, preferably an aryl group having 6 to 10 carbon atoms, and more preferably a phenyl group. In a case where the aryloxycarbonyl group has a substituent, the substituent is selected from, for example, substituent group A and is preferably a nitro group.

In a case where $R^{101}$, $R^{102}$, $R^{103}$, and $R^{104}$ represent a substituted or unsubstituted monoalkylaminocarbonyl group, it is preferable that the monoalkylaminocarbonyl group is represented by $-CONHR^{203}$. Here, $R^{203}$ represents an alkyl group having 1 to 12 carbon atoms, preferably an alkyl group having 1 to 10 carbon atoms, more preferably an alkyl group having 1 to 6 carbon atoms, still more preferably a methyl group, an ethyl group, an isopropyl group, a hexyl group, a 2-ethylhexyl group, a dodecyl group, or a cyclohexyl group, and even still more preferably an isopropyl group. In addition, in a case where the monoalkylaminocarbonyl group has a substituent, the substituent is selected from, for example, the substituent group A and is preferably a phenyl group, a carboxyl group, a substituted or unsubstituted amino group, or a hydroxyl group.

In a case where $R^{101}$, $R^{102}$, $R^{103}$, and $R^{104}$ represent a substituted or unsubstituted dialkylaminocarbonyl group, it is preferable that the dialkylaminocarbonyl group is represented by $-CONR^{204}R^{205}$. Here, $R^{204}$ and $R^{205}$ each independently represent an alkyl group having 1 to 10 carbon atoms, preferably an alkyl group having 1 to 6 carbon atoms, and more preferably a methyl group or an isopropyl group. In addition, in a case where the dialkylaminocarbonyl group has a substituent, the substituent is selected from, for example, the substituent group A, and is preferably a carboxyl group or an alkyloxycarbonyl group (preferably an alkyloxycarbonyl group having 2 to 6 carbon atoms, and more preferably an ethyloxycarbonyl group).

In a case where $R^{101}$, $R^{102}$, $R^{103}$, and $R^{104}$ represent a substituted or unsubstituted monoarylaminocarbonyl group, it is preferable that the monoarylaminocarbonyl group is represented by $-CONHR^{206}$. Here, $R^{206}$ represents an aryl group having 6 to 14 carbon atoms, preferably an aryl group having 6 to 12 carbon atoms, and more preferably an aryl group having 6 to 10 carbon atoms. Specifically, a phenyl group, a biphenyl group, or a naphthyl group is preferable, and a phenyl group is more preferable. In addition, in a case where the monoarylaminocarbonyl group has a substituent, the substituent is selected from, for example, the substituent group A, and is preferably a carboxyl group, a hydroxyl group, a phosphono group, or an alkoxy group (preferably an alkoxy group having 1 to 6 carbon atoms, and more preferably a cyclohexyloxy group).

In a case where $R^{101}$, $R^{102}$, $R^{103}$, and $R^{104}$ represent a substituted or unsubstituted diarylaminocarbonyl group,

it is preferable that the diarylaminocarbonyl group is represented by $-CONR^{207}R^{208}$. Here, $R^{207}$ and $R^{208}$ each independently represent an aryl group having 6 to 14 carbon atoms, preferably an aryl group having 6 to 10 carbon atoms, and more preferably a phenyl group. In addition, in a case where the diarylaminocarbonyl group has a substituent, the substituent is selected from, for example, the substituent group A.

In a case where $R^{101}$, $R^{102}$, $R^{103}$, and $R^{104}$ represent a substituted or unsubstituted alkylarylaminocarbonyl group, it is preferable that the alkylarylaminocarbonyl group is represented by $-CONR^{209}R^{210}$. Here, $R^{209}$ represents an alkyl group having 1 to 10 carbon atoms and preferably an alkyl group having 1 to 6 carbon atoms. $R^{210}$ represents an aryl group having 6 to 14 carbon atoms and preferably an aryl group having 6 to 10 carbon atoms. In addition, in a case where the alkylarylaminocarbonyl group has a substituent, the substituent is selected from, for example, the substituent group A.

In a case where $R^{101}$, $R^{102}$, $R^{103}$, and $R^{104}$ represent a substituted or unsubstituted alkylcarbonyl group, as the alkylcarbonyl group, an alkylcarbonyl group having 1 to 6 carbon atoms is preferable, an alkylcarbonyl group having 1 to 3 carbon atoms is more preferable, and a methylcarbonyl group is still more preferable. In addition, it is preferable that the alkylcarbonyl group has a substituent, and the substituent is selected from, for example, the substituent group A and is preferably a carboxyl group, an amino group, a substituted alkoxy group, or a substituted aryloxy group.

In a case where $R^{101}$, $R^{102}$, $R^{103}$, and $R^{104}$ represent a substituted or unsubstituted arylcarbonyl group, as the arylcarbonyl group, an arylcarbonyl group having 6 to 14 carbon atoms is preferable, an arylcarbonyl group having 6 to 10 carbon atoms is more preferable, and a phenylcarbonyl group is still more preferable. In addition, it is preferable that the arylcarbonyl group has a substituent, and the substituent is selected from, for example, the substituent group A.

It is preferable that the compound represented by Formula (3) is a compound represented by the following Formula (5), and it is preferable that the compound represented by Formula (4) is a compound represented by the following Formula (6). That is, it is preferable that the compound represented by Formula (1) or (2) is a compound represented by the following Formula (5) or (6).

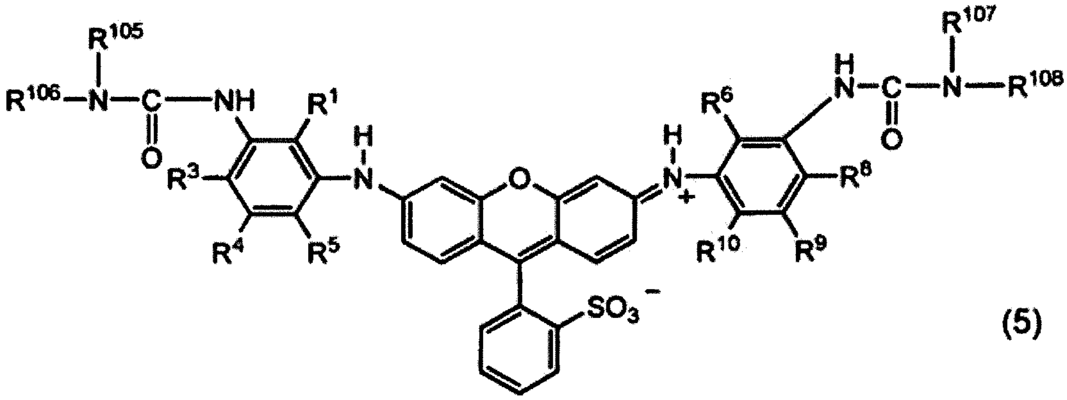

(5)

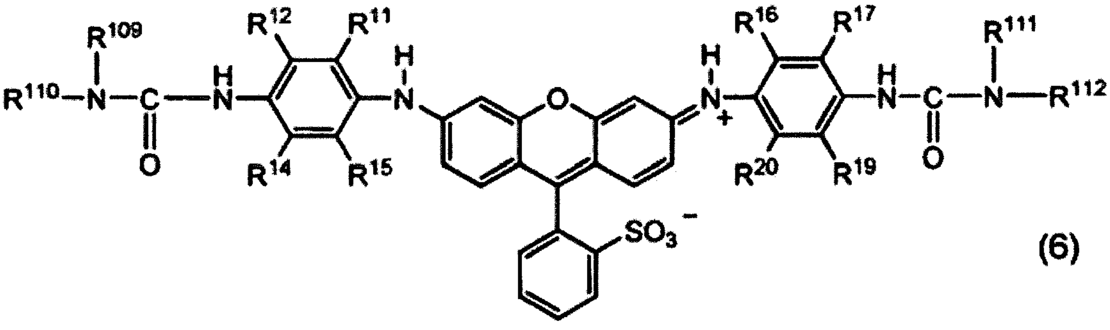

(6)

In Formula (5) or (6), $R^3$, $R^4$, $R^8$, $R^9$, $R^{12}$, $R^{14}$, $R^{17}$, $R^{19}$, $R^{105}$, $R^{106}$, $R^{107}$, $R^{108}$, $R^{109}$, $R^{110}$, $R^{111}$, and $R^{112}$ each independently represent a hydrogen atom or a substituent. $R^1$, $R^5$, $R^6$, $R^{10}$, $R^{11}$, $R^{15}$, $R^{16}$, and $R^{20}$ each independently represent substituted or unsubstituted alkyl group.

Specific examples and preferable ranges of $R^1$, $R^3$, $R^4$, $R^5$, $R^6$, $R^8$, $R^9$, $R^{10}$, $R^{11}$, $R^{12}$, $R^{14}$, $R^{15}$, $R^{16}$, $R^{17}$, $R^{19}$, and $R^{20}$ in Formula (5) or (6) are the same as those of $R^1$, $R^3$, $R^4$, $R^5$, $R^6$, $R^8$, $R^9$, $R^{10}$, $R^{11}$, $R^{12}$, $R^{14}$, $R^{15}$, $R^{16}$, $R^{17}$, $R^{19}$, and $R^{20}$ in Formula (3) or (4).

$R^{105}$, $R^{106}$, $R^{107}$, $R^{108}$, $R^{109}$, $R^{110}$, $R^{111}$ and $R^{112}$ each independently represent preferably a hydrogen atom, a substituted or unsubstituted alkyl group, or a substituted or unsubstituted aryl group.

In a case where $R^{105}$, $R^{106}$, $R^{107}$, $R^{108}$, $R^{109}$, $R^{110}$, $R^{111}$ and $R^{112}$ represent a substituted or unsubstituted alkyl group, as the alkyl group, an alkyl group having 1 to 12 carbon atoms is preferable, an alkyl group having 1 to 6 carbon atoms is more preferable, and an alkyl group having 1 to 3 carbon atoms is still more preferable. Examples of the alkyl group include a linear, branched, or cyclic alkyl group. Specifically, a methyl group, an ethyl group, a n-propyl group, an isopropyl group, a n-butyl group, an isobutyl group, a sec-butyl group, a t-butyl group, or a cyclohexyl group is preferable, a methyl group, an ethyl group, or an isopropyl group is more preferable, and a methyl group or an ethyl group is still more preferable. The alkyl group may have a substituent, and this substituent is selected from, for example, the substituent group A and is preferably an ionic hydrophilic group, more preferably a sulfo group, a carboxyl group, or a phosphono group, and still more preferably a sulfo group or a carboxyl group. In particular, a methyl group which is substituted with one sulfo group or carboxyl group, or an ethyl group which is substituted with one sulfo group or carboxyl group is preferable.

In a case where $R^{105}$, $R^{106}$, $R^{107}$, $R^{108}$, $R^{109}$, $R^{110}$, $R^{111}$ and $R^{112}$ represent a substituted or unsubstituted aryl group, as the aryl group, an aryl group having 6 to 14 carbon atoms is preferable, and an aryl group having 6 to 10 carbon atoms is more preferable. Specific examples of the aryl group include a phenyl group and a naphthyl group. Among these, a phenyl group is preferable. The aryl group may have a substituent, and this substituent is selected from, for example, the substituent group A and is preferably a hydroxyl group or an ionic hydrophilic group, more preferably a sulfo group, a carboxyl group, or a phosphono group, and still more preferably a sulfo group or a carboxyl group. In particular, a phenyl group which is substituted with one sulfo group or carboxyl group at a para position, a phenyl group which is substituted with one sulfo group or carboxyl group at a meta position, a phenyl group which is substituted with one sulfo group or carboxyl group at each of a para position and a meta position, or a phenyl group which is substituted with one sulfo group or carboxyl group at each of two meta positions is preferable.

At least one of $R^{105}$, $R^{106}$, $R^{107}$, $R^{108}$, $R^{109}$, $R^{110}$, $R^{111}$, or $R^{112}$ represents an alkyl group which is substituted with an ionic hydrophilic group, or an aryl group which is substituted with an ionic hydrophilic group, and it is preferable that at least one of $R^{105}$, $R^{106}$, $R^{107}$, $R^{108}$, $R^{109}$, $R^{110}$, $R^{111}$, or $R^{112}$ represents an alkyl group which is substituted with an ionic hydrophilic group, or an aryl group which is substituted with an ionic hydrophilic group. The total number of ionic hydrophilic groups included in $R^{105}$, $R^{106}$, $R^{107}$, $R^{108}$, $R^{109}$, $R^{110}$, $R^{111}$, and $R^{112}$ is preferably 1 to 6 and more preferably 2 to 4.

Examples of a counter cation of the ionic hydrophilic group such as a carboxyl group, a sulfo group, or a phosphono group include a hydrogen atom (proton), an alkali metal cation (a lithium ion, a sodium ion, or a potassium ion), and an ammonium ion. From the viewpoint of synthesis easiness (easy handleability of dye powder), the counter cation is preferably an alkali metal cation or an ammonium ion. In addition, the ionic hydrophilic group may have two or more kinds of cations as counter cations.

Hereinafter, specific examples of the compound represented by Formula (1), (2), or (X) will be shown, but the present invention is not limited thereto. In the following specific formulae of the compounds, Me represents a methyl group, Et represents an ethyl group, i-Pr represents an isopropyl group, and Ac represents an acetyl group.

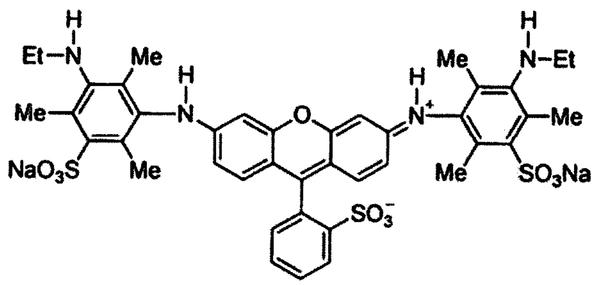

(1 − 1)

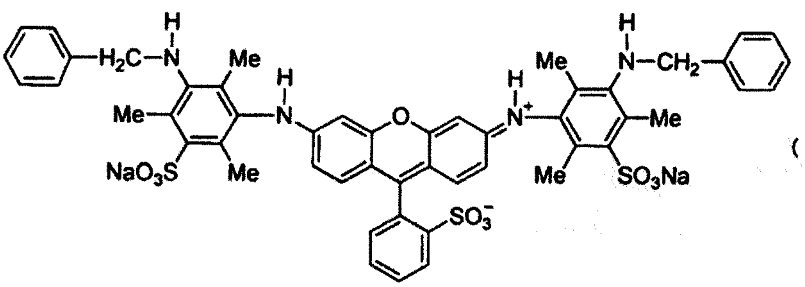

(1 − 2)

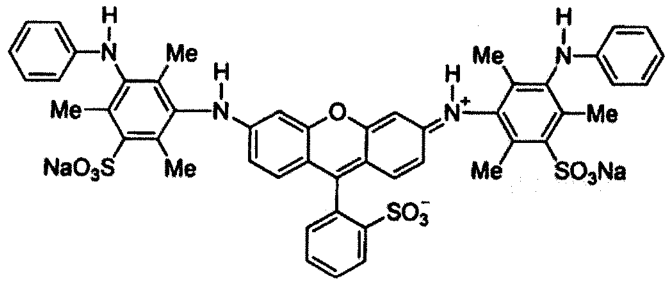

(1－3)

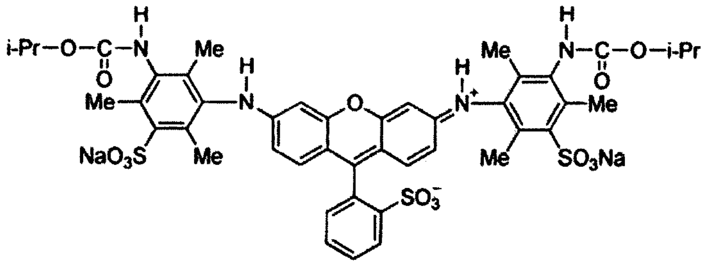

(1－4)

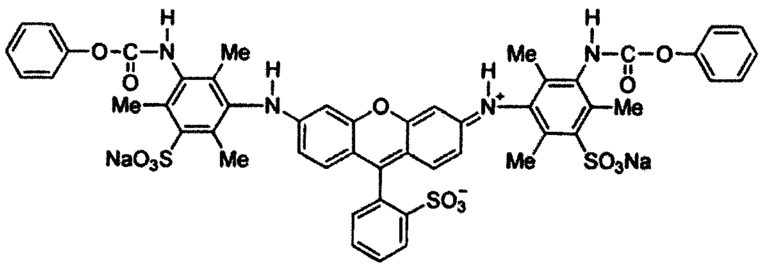

(1－5)

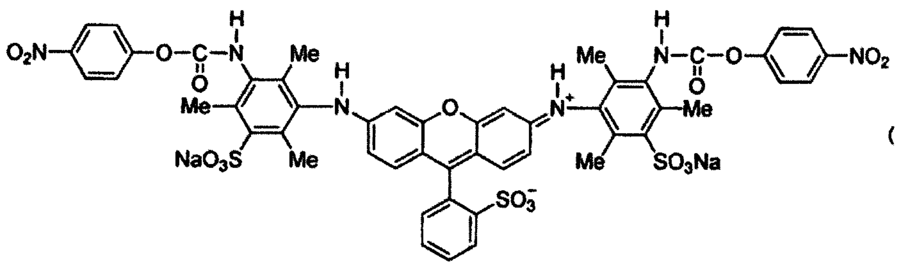

(1－6)

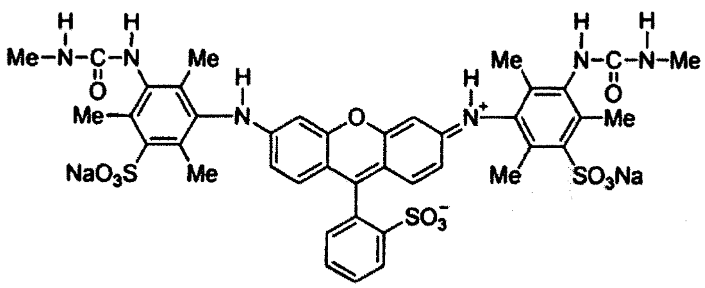

(1－7)

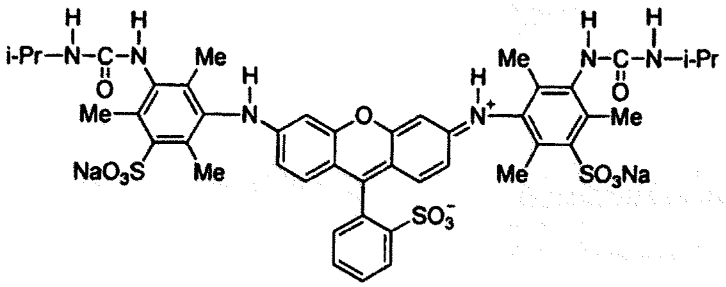

(1-8)

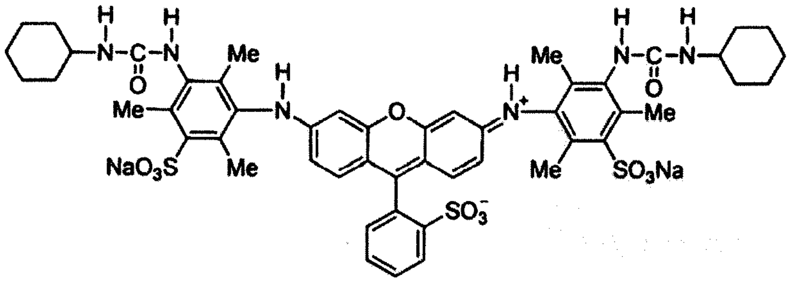

(1-9)

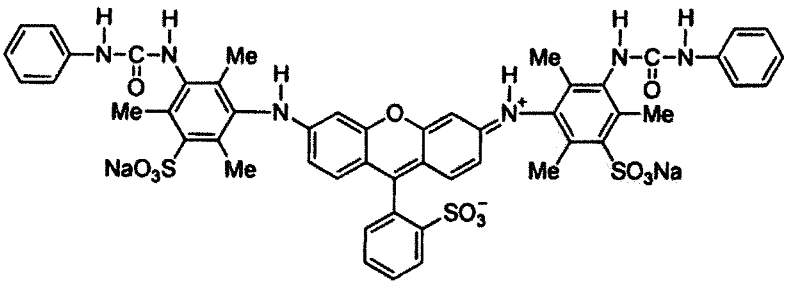

(1-10)

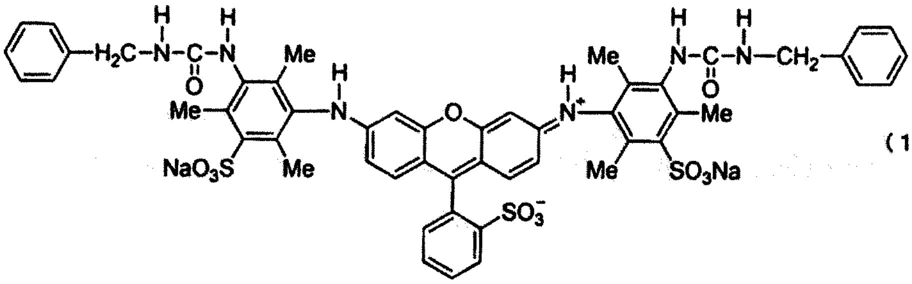

(1-11)

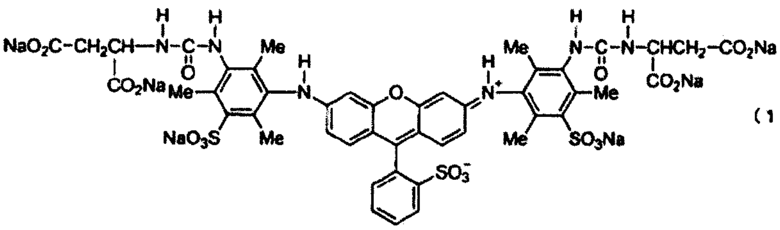

(1-12)

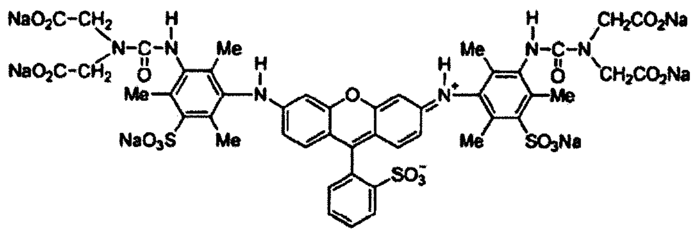

(1-13)

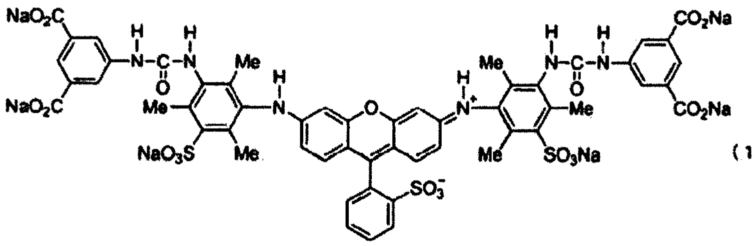

(1-14)

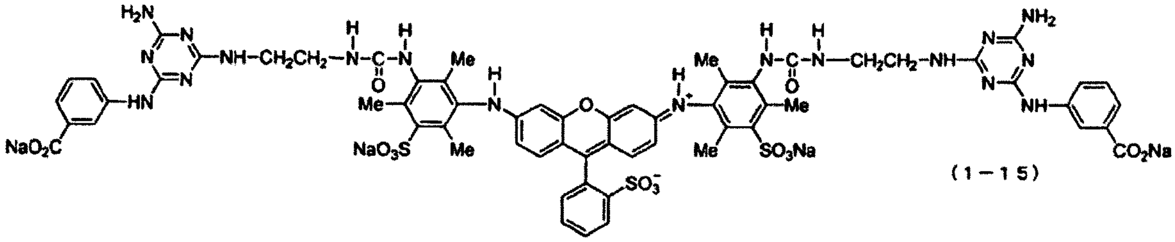

(1-15)

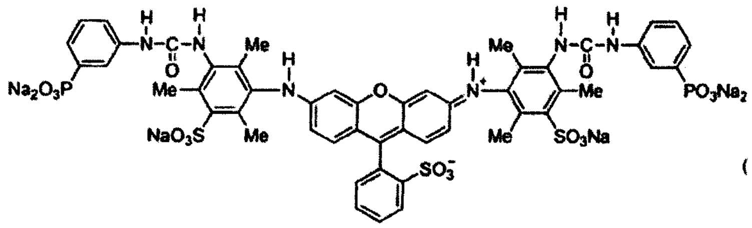

(1-16)

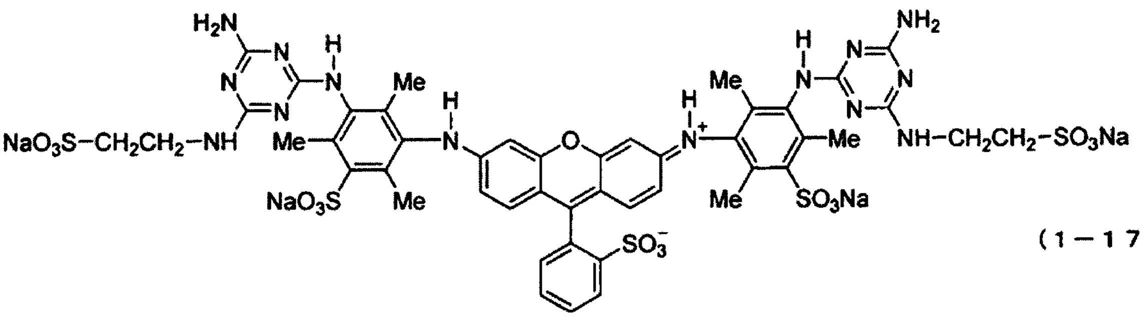

(1-17)

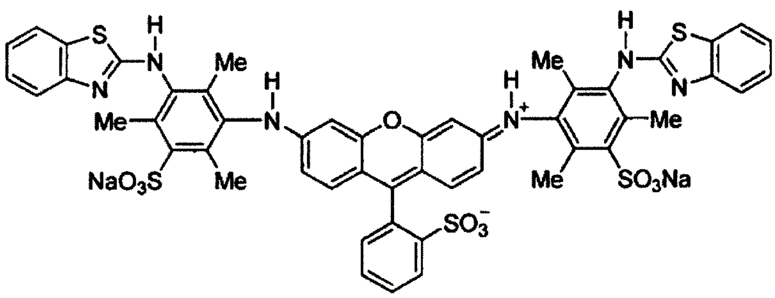

(1-18)

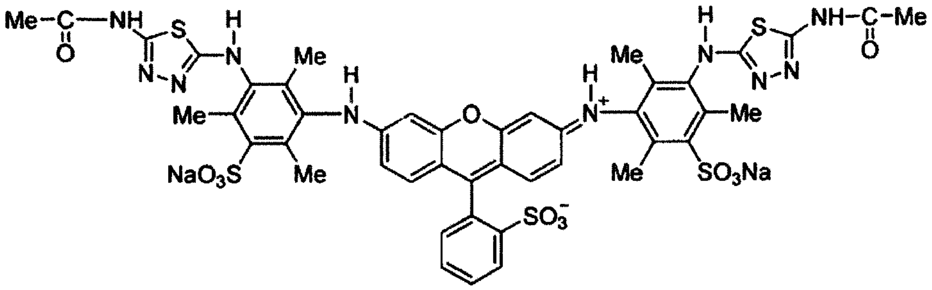

(1－19)

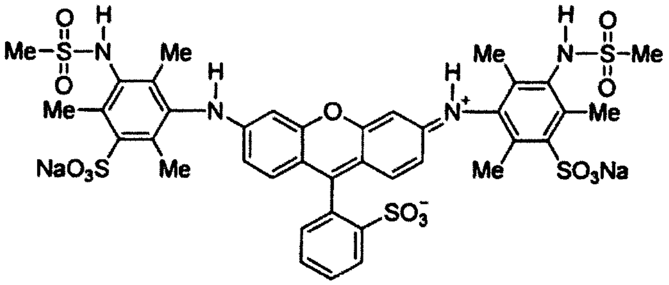

(1－20)

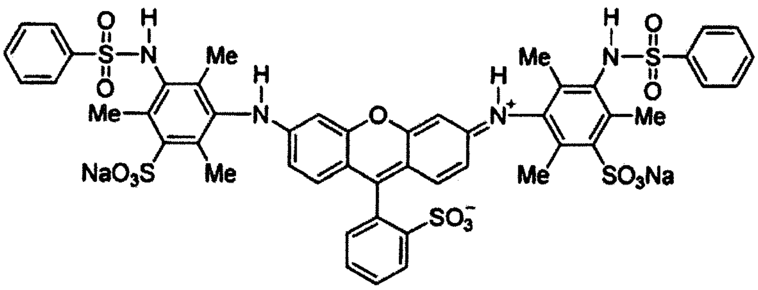

(1－21)

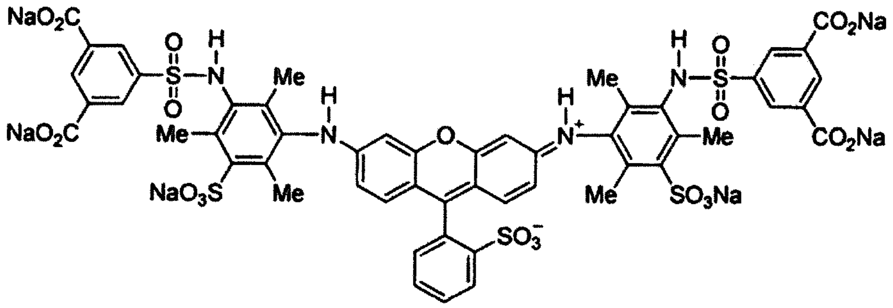

(1－22)

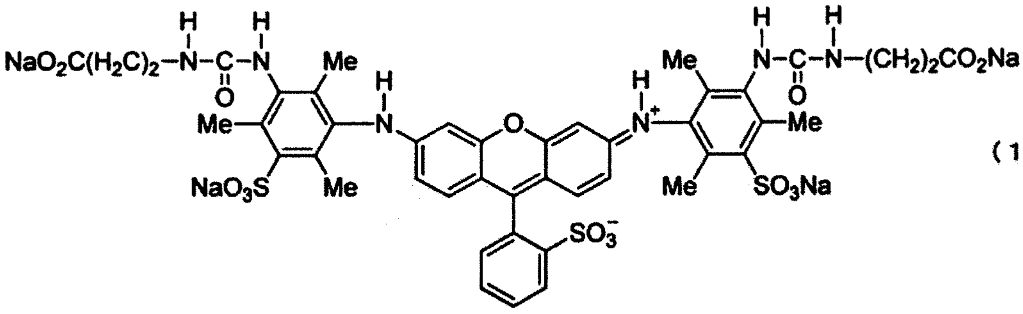

(1－23)

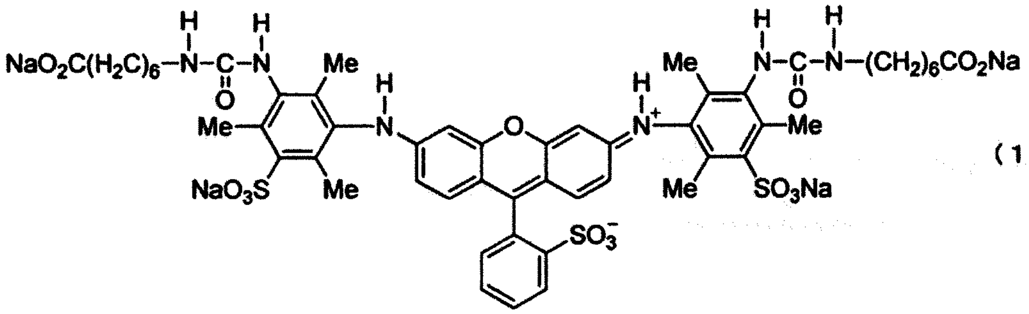

(1－24)

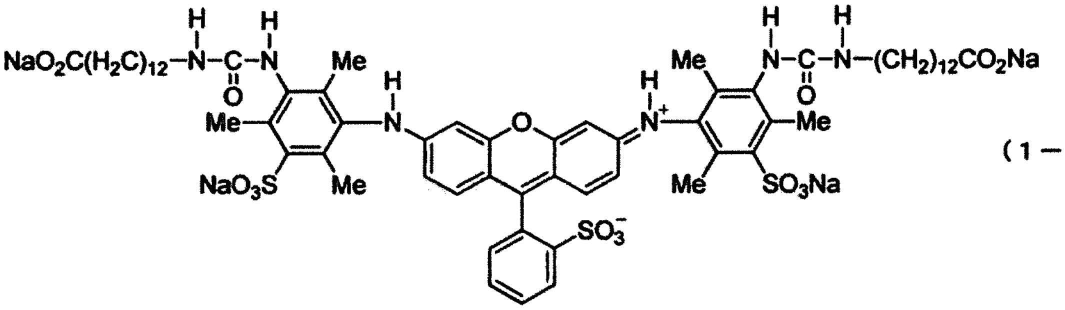

(1－25)

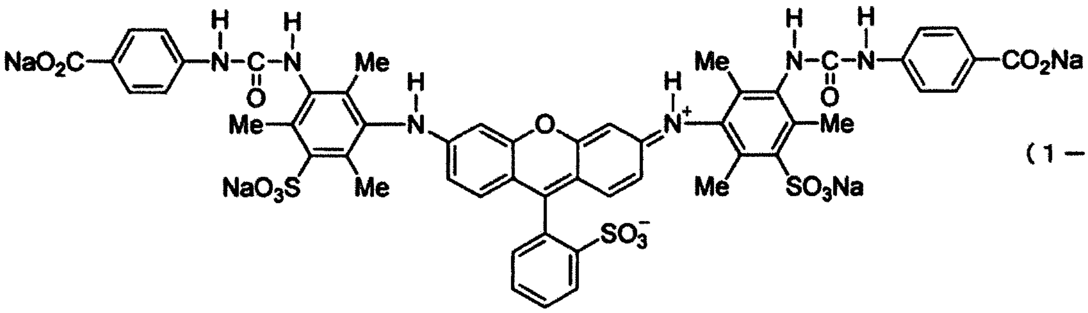

(1－26)

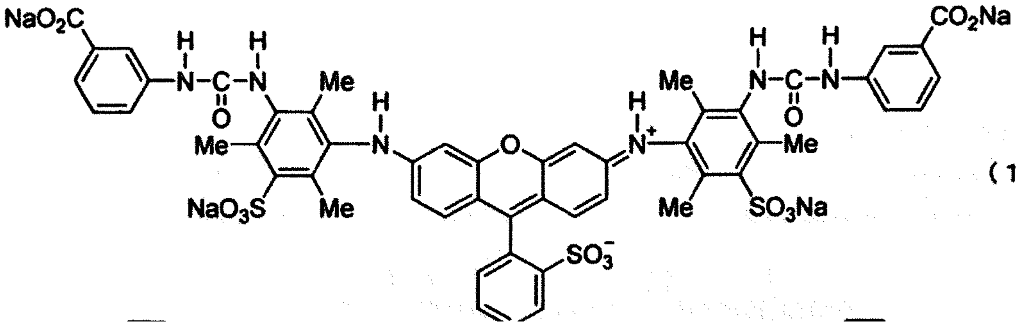

(1－27)

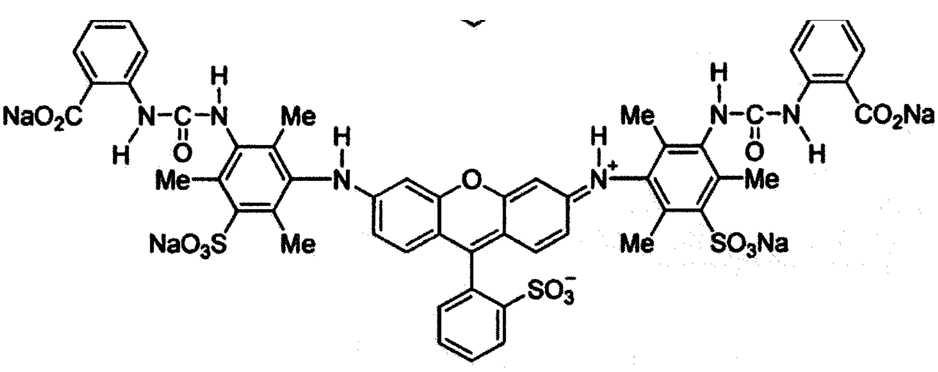

(1－28)

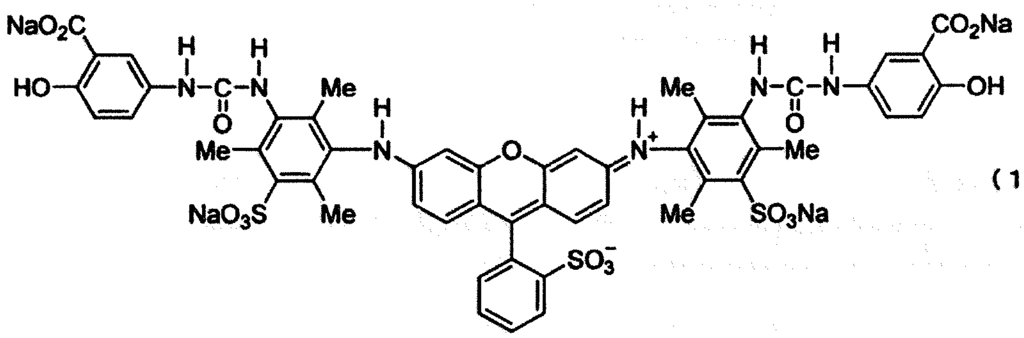

(1－29)

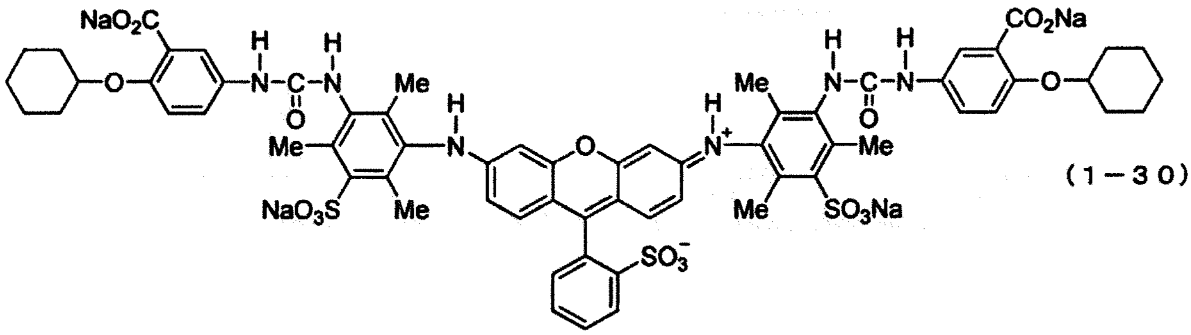

(1－30)

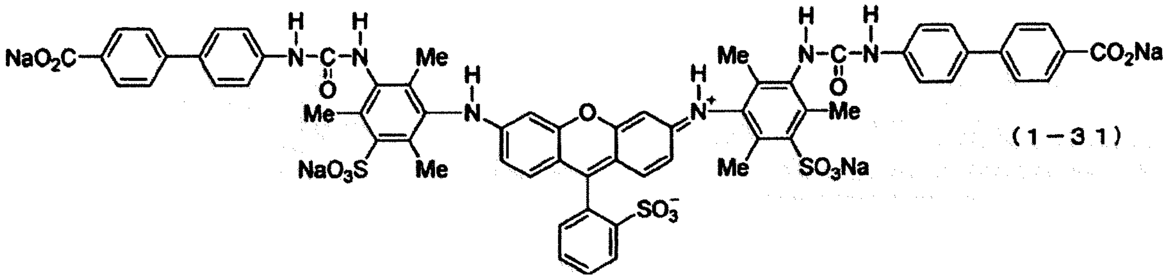

(1－31)

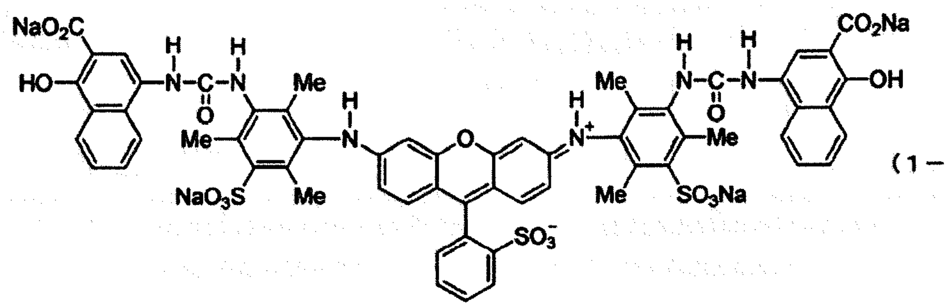

(1－32)

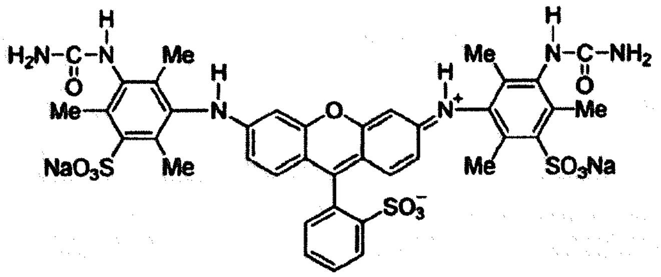

(1－33)

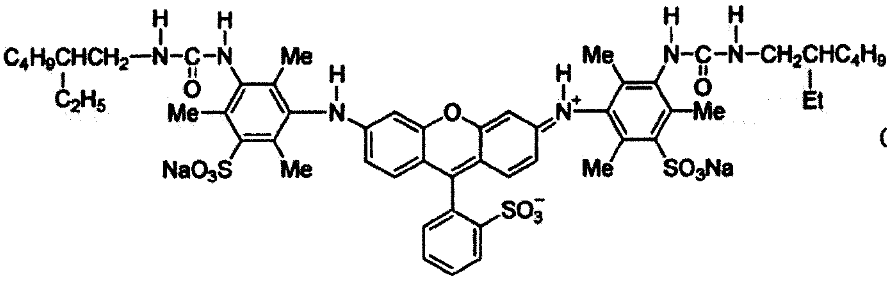

(1－3 4)

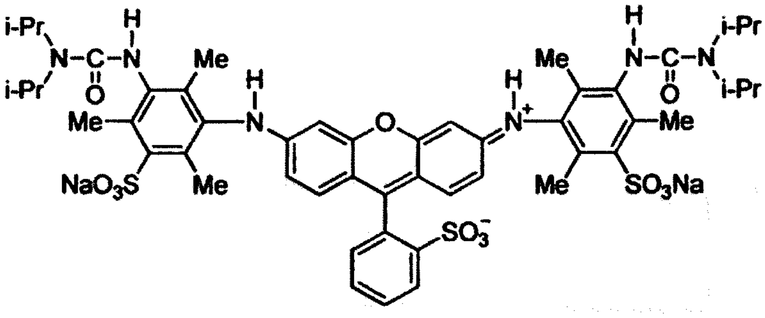

(1－3 5)

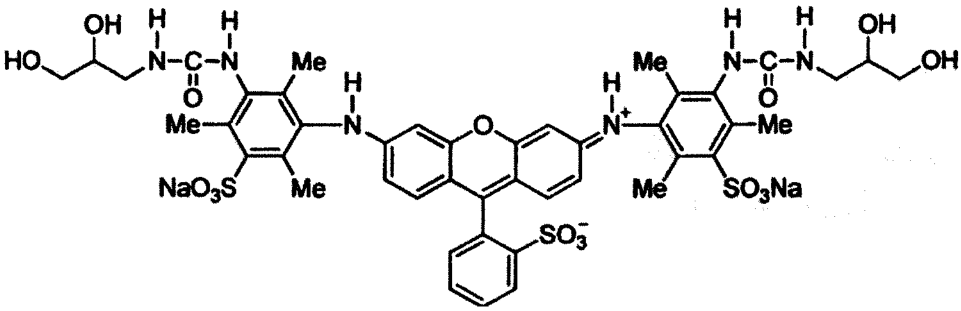

(1－3 6)

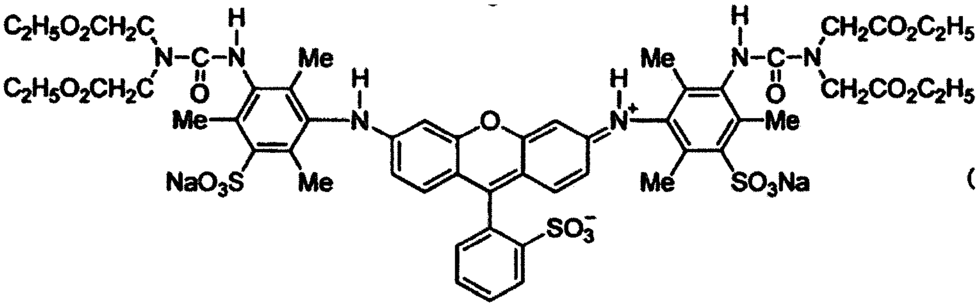

(1－3 7)

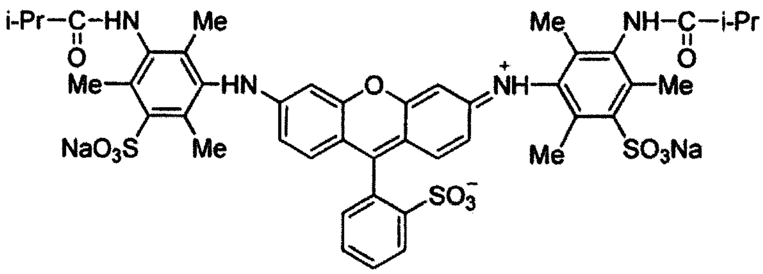

(1－3 8)

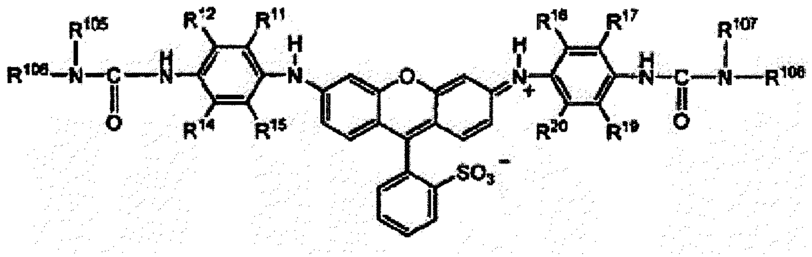

| Exemplary Compound | $R^{11}$ | $R^{12}$ | $R^{14}$ | $R^{15}$ | $R^{16}$ | $R^{17}$ | $R^{19}$ | $R^{20}$ | $R^{105}$ | $R^{100}$ | $R^{107}$ | $R^{108}$ |
|---|---|---|---|---|---|---|---|---|---|---|---|---|
| (2-1) | Me | Me | Me | Me | Me | Me | Me | Me | $(CH_2)_2CO_2Na$ | H | $(OH_2)_2CO_2Na$ | H |
| (2-2) | Me | Me | Me | Me | Me | Me | Me | Me | $(CH_2)_2SO_3Na$ | H | $(CH_2)_2SO_3Na$ | H |
| (2-3) | Me | Me | Me | Me | Me | Me | Me | Me | $CH_2CO_2Na$ | $CH_2CO_2Na$ | $CH_2CO_2Na$ | $CH_2CO_2Na$ |
| (2-4) | Me | Me | Me | Me | Me | Me | Me | Me | 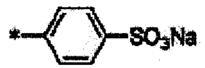 | H | 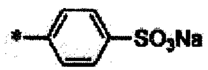 | H |
| (2-6) | Me | Me | Me | Me | Me | Me | Me | Me | 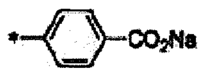 | H | 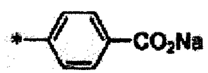 | H |
| (2-6) | Me | Me | Me | Me | Me | Me | Me | Me | 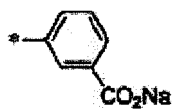 | H | 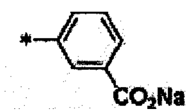 | H |
| (2-7) | Me | Me | Me | Me | Me | Me | Me | Me | 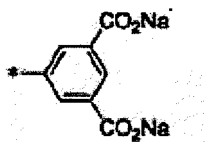 | H | 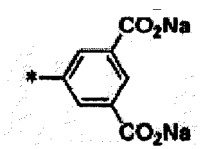 | H |

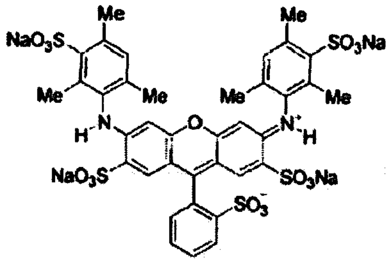

Exemplary Compound (3-1)

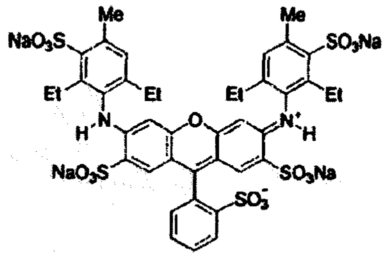

Exemplary Compound (3-2)

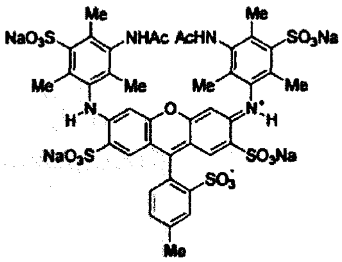

Exemplary Compound (3-3)

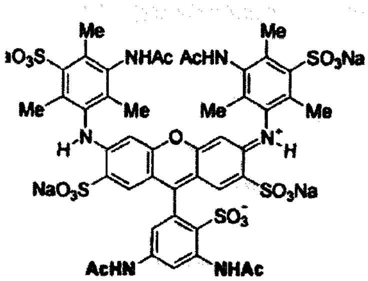

Exemplary Compound (3-4)

The compound represented by Formula (1) or (2) can be synthesized using a well-known method of the related art (for example, JP2011-148973A). In addition, the compound represented by Formula (X) can be synthesized using a well-known method of the related art (for example, JP2014-5462A).

The coloring composition for dyeing or textile printing (hereinafter, also referred to as "coloring composition") according to the present invention may include one compound or plural compounds among the compound represented by Formula (1), the compound represented by Formula (2), and the compound represented by Formula (X). Among these compounds represented by the formulae, one kind may be used alone, or two or more kinds may be used in combination.

The coloring composition according to the present invention may consist of only the compound represented by Formula (1), (2), or (X) but may further include other colorants within a range where the effects of the present invention do not deteriorate. Examples of the other colorants which may be used in combination with the compound represented by Formula (1), (2), or (X) include dyes described in pp. 33 to 121 and pigments described in pp. 124 to 130 of "Dyeing Note" (Vol. 24, Published by Shikisensha Co., Ltd.; hereinafter, the same shall be applied).

The content of the compound represented by Formula (1), (2), or (X) in the coloring composition is preferably 1 to 20 mass% and more preferably 1 to 10 mass%.

By adjusting the content of the compound represented by Formula (1), (2), or (X) in the coloring composition to be 1 mass% or higher, the printing density of ink on a recording medium during printing can be improved, and a required image density can be secured. In addition, by adjusting the content of the compound represented by Formula (1), (2), or (X) in the coloring composition to be 20 mass% or lower, in a case where dip dyeing or a textile printing method such as screen printing or roller printing is used, the deposition of a dye can be prevented, and the concentration thereof can be appropriately adjusted. In a case where an ink jet textile printing method is used, the jettability of the coloring composition can be improved, and, for example, an effect of preventing ink jet nozzle clogging can be obtained.

In general, the coloring composition according to the present invention includes a solvent in addition to the compound represented by Formula (1), (2), or (X). The kind and amount of the solvent may vary depending on the kind, dyeing concentration, and dyeing method of the compound represented by Formula (1), (2), or (X). However, the content of the solvent in the coloring composition is preferably 40 mass% or higher with respect to the total mass of the coloring composition. It is preferable that the solvent includes water, and the content of water in the solvent is preferably 50 mass% or higher with respect to the total mass of the solvent. In addition, the content of water in the solvent is preferably 30 mass% or higher with respect to the total mass of the coloring composition.

(Coloring Composition for Dyeing or Textile Printing, and Dyeing or Textile Printing Method)

The coloring composition for dyeing or textile printing according to the present invention is not limited in the

form of use as long as it is a coloring composition for dyeing a fiber. A method of dyeing a fiber is roughly classified into a dip dyeing method and a textile printing method. Dip dyeing is a process of dipping fabric to be dyed or yarn to be dyed in a dye solution, which is obtained by dissolving or dispersing a dye in a solvent, such that the dye is uniformly adsorbed on a surface of a fiber, is diffused into the fiber, and is fixed on the fiber by bonding. Textile printing is a dyeing method of producing a dyed material having a pattern by applying a dye or a pigment to fabric to be dyed to form a pattern thereon and fixing the dye or pigment on the fabric, and an effect of forming a pattern using one color or multiple colors can be exhibited. Industrially, screen printing and roller printing in which a plate is used, transfer printing in which transfer paper is used, or ink jet textile printing in which a plate-making step is unnecessary is performed.

[[Coloring Composition for Dip Dyeing and Method using The Same]]

Dip dyeing includes: a step of dipping fabric or yarn in a dye solution such that a dye is fixed on the fabric or the yarn; a washing step of washing off a portion of the dye which is not fixed on the fiber; and a drying step. In a case where the coloring composition according to the present invention is used for dip dyeing, the coloring composition can be used in the form of a dye solution in which fabric can be dipped. In this case, the dye solution may include not only a dye but also a solvent, a level dyeing agent, a pH adjuster, an inorganic neutral salt, or a dispersant. As the solvent, in general, water is used. As the additives such as a level dyeing agent, well-known additives can be used, and examples thereof include a wetting agent and a penetrant described in pp. 134 to 145 of "Dyeing Note", a metal ion binding agent described in pp. 147 to 154 of "Dyeing Note", a dispersant described in pp. 216 to 222 of "Dyeing Note", a level dyeing agent described in pp. 230 to 255 of "Dyeing Note", a resisting agent described in pp. 285 and 286 of "Dyeing Note", a migration inhibitor described in pp. 279 to 284 of "Dyeing Note", a dye fixing agent and a color fastness improving agent described in pp. 304 to 321 of "Dyeing Note", and a pH adjuster described in pp. 322 to 334 of "Dyeing Note". For uniform dyeing of a dye with high concentration, in addition to a method of using additives, a method of controlling dye concentration, dye-bath pH, salt concentration, dyeing temperature, dyeing time, pressure, and liquid current can be used.

In the washing step, water or warm water is used in a temperature range of normal temperature to 100°C. Water for washing may include a soaping agent. By completely removing a non-fixed portion of a colorant, satisfactory results can be obtained in various kinds of water fastness, for example, washing fastness or perspiration fastness.

In the drying step, specifically, washed fabric is squeezed or dehydrated and then is hung out to dry or dried using a heat roll, an iron, or the like.

[[Coloring Composition for Screen Printing, Roller Printing, or Transfer Printing, and Textile Printing Method using The Same]]

In a case where the coloring composition according to the present invention is used for screen printing, roller printing, or transfer printing, the coloring composition is used in the form of a color paste which is printed on fabric through a plate or transfer paper.

The textile printing method according to the present invention includes at least the following steps (1) to (4):

(1) a step of to adjusting a color paste by adding the coloring composition according to the present invention to a solution including at least a polymer compound and water;
(2) a step of printing the color paste of (1) on fabric;
(3) a step of applying steam to the printed fabric; and
(4) a step of washing the printed fabric with water and drying the washed fabric.

The color paste is required to satisfy the following suitabilities: printing suitability for printing the color paste on a plate; and dyeing suitability for a printed material in fixing and water washing treatments.

Therefore, in order to impart the printing suitability and the dyeing suitability, the color paste may include not only a dye but also a paste, a solvent, dyeing auxiliaries, and the like. The paste is a medium of the coloring composition, and a water-soluble polymer is used. Examples of the water-soluble polymer include a well-known water-soluble polymer such as a starch, a seaweed, a natural gum, a cellulose derivative, sodium alginate, a protein material, a tannin material, or a lignin material. In addition, a well-known synthetic polymer such as a polyvinyl alcohol compound, a polyethylene oxide compound, an acrylic acid aqueous polymer, a styrene aqueous polymer, or a maleic anhydride aqueous polymer can also be used as the paste. For example, a paste for textile printing described in pp. 349 to 361 of "Dyeing Note" can also be used. In addition, the paste can be used in combination with a printing paste improving agent described in pp. 367 to 369 of "Dyeing Note". A mixture of two or more kinds of pastes may be used. As the solvent, a water-soluble solvent is preferably used, and a solvent including at least water is most preferably used.

Examples of the dyeing auxiliaries include a color former such as an acid or an alkali, a dye solubilizer, a wetting agent, a moisture absorbent, a deep dyeing agent, an anti-reducing agent, a metal ion binding agent, a ultraviolet

absorber, a dispersant, a resisting agent, a discharge agent, a preservative, an fungicide, an antioxidant, a migration inhibitor, a dye fixing agent, and a defoaming agent.

As the dyeing auxiliaries, well-known dyeing auxiliaries can be used, and examples thereof include a solubilizer and a solubilizing agent described in pp. 336 to 338 of "Dyeing Note", a deep dyeing agent, a level dyeing agent, and a penetrant described in pp. 339 to 345 of "Dyeing Note", a defoaming agent described in pp. 346 to 348 of "Dyeing Note", a metal ion binding agent described in pp. 147 to 154 of "Dyeing Note", a dispersant described in pp. 216 to 222 of "Dyeing Note", a resisting agent described in pp. 370 to 374 of "Dyeing Note", a discharge agent described in pp. 375 to 381 of "Dyeing Note", a preservative and an fungicide described in pp. 362 to 363 of "Dyeing Note", a migration inhibitor described in pp. 279 to 284 of "Dyeing Note", a dye fixing agent described in pp. 426 to 429 of "Dyeing Note", a wet fastness improving agent described in JP1994-166969A (JP-H06-166969A), and a light fastness improving agent described in US5336443A.

Dyeing auxiliaries are added to a paste solution obtained by dissolving or dispersing a paste in a solvent, a dye solution obtained by dissolving or dispersing a dye in a solvent is added to the paste solution, and the components are stirred. As a result, a color paste is prepared (a step of preparing a color paste).

In the textile printing method, unlike the dip dyeing method, after printing the color paste on fabric (a step of printing the color paste on fabric), a treatment of fixing the colorant, which is printed on the fabric, on the fiber. This treatment is called a color developing step, and a method using heated air or a method using normal pressure saturated steam or superheated steam can be performed for the treatment. In particular, a method using normal pressure saturated steam is preferable. In the present invention, a step of applying steam to the printed fabric is performed. In the step of applying steam to the printed fabric, the temperature and time in the steam treatment vary depending on the kind of the coloring composition and the kind of the fabric. For example, the temperature is preferably 100°C to 108°C, and the time is preferably 1 to 60 minutes and more preferably 1 to 30 minutes. After the step of applying steam to the printed fabric, as in the case of dip dyeing, a washing step and a drying step are performed to obtain a printed material. It is preferable that the fabric includes polyamide.

[[Coloring Composition for Ink Jet Textile Printing and Method using The Same]]

In a case where the coloring composition according to the present invention is used for ink jet textile printing, the coloring composition is used in the form of an ink for ink jet textile printing. An ink jet textile printing method has advantageous effects in that, compared to a textile printing method of the related art, an image having excellent tone characteristics can be rapidly formed. Therefore, there are merits in that, for example, the delivery time can be reduced, many kinds in small quantities can be produced, and a plate-making step is unnecessary. Further, in ink jet textile printing, only an amount of ink required for forming an image is used. Therefore, it can be said that ink jet textile printing is an image forming method having excellent environmental friendliness in that, for example, the amount of waste liquid is less than that in a method of the related art.

The ink for ink jet textile printing causes nozzle clogging of an ink jet head in a case where the viscosity thereof increases due to evaporation of water, an aqueous organic solvent, or the like from a nozzle tip or a case where a dye as a solid component is deposited. Therefore, it is required that the ink for ink jet textile printing has more satisfactory color developing properties than that used in textile printing of the related art. In addition, it is required that ink suitability such as ink storage stability or jetting stability, dyeing suitability such as bleeding prevention or contamination prevention, and image fastness such as light fastness, water fastness, or washing fastness are also imparted to the ink for ink jet textile printing.

An ink jet textile printing method according to the present invention includes at least the following steps (11) to (14):

(11) a step of applying a paste including at least a polymer compound and water to fabric;
(12) a step of printing the coloring composition according to the present invention on the fabric using an ink jet method;
(13) a step of applying steam to the printed fabric; and
(14) a step of washing the printed fabric with water and drying the washed fabric.

In a case where a color paste used in a textile printing method of the related art is used in the ink jet textile printing method, nozzle clogging occurs. Therefore, in the ink jet textile printing method, a pre-treatment step of applying a paste to fabric in advance (the step of applying a paste including at least a polymer compound and water to fabric) is necessary. By performing the pre-treatment step, fabric handleability is improved. Specifically, pre-treated fabric is obtained by applying a paste solution including a paste, a solvent, and a hydrotropy agent to fabric and drying the fabric. It is preferable that the fabric includes polyamide.

As the paste, the same paste as that used for screen printing or the like can be used. As the solvent, a water-soluble solvent is preferably used, and a solvent including at least water is most preferably used.

In general, the hydrotropy agent serves to increase the color optical density of an image when fabric to which an ink composition is applied is heated by steam. For example, typically, urea, alkyl urea, ethylene urea, propylene urea, thiourea, guanidine hydrochloride, or tetraalkyl ammonium halide is used. In addition, a well-known hydrotropy agent can be used, and examples thereof include a dye fixing agent described in pp. 426 to 429 of "Dyeing Note". The content of the hydrotropy agent is preferably 0.01 mass% to 20 mass% with respect to the total solid content of the paste solution.

Optionally, the paste solution further includes, for example, a pH adjuster, an aqueous (water-soluble) metal salt, a water repellant, a surfactant, a migration inhibitor, or a micropore forming agent. As these additives, well-known additives can be used, and examples thereof include a solubilizer and a solubilizing agent described in pp. 336 to 338 of "Dyeing Note", a deep dyeing agent, a level dyeing agent, and a penetrant described in pp. 339 to 345 of "Dyeing Note", a metal ion binding agent described in pp. 147 to 154 of "Dyeing Note", a resisting agent described in pp. 370 to 374 of "Dyeing Note", a discharge agent described in pp. 375 to 381 of "Dyeing Note", a preservative and an fungicide described in pp. 362 to 363 of "Dyeing Note", a migration inhibitor described in pp. 279 to 284 of "Dyeing Note", a micropore forming agent described in JP1995-316991A (JP-H07-316991A), a wet fastness improving agent described in JP1994-166969A (JP-H06-166969A), and a light fastness improving agent described in US5336443A. In addition, an additive described in paragraphs "0096" to "0101" of JP2013-209786A can also be used.

In the pre-treatment, the paste solution is padded at an squeezing rate of 5% to 150% and preferably 10% to 130%.

In the pre-treatment, a method of applying the respective paste solutions to fabric is not particularly limited, and examples thereof include methods which are typically performed, for example, a padding method, a coating method, a screening method, a spraying method, a transfer method, and an ink jet method.

Next, the pre-treated fabric is printed using the ink for ink jet textile printing.

The ink for ink jet textile printing can be prepared by dissolving and/or dispersing the compound (mixture) represented by Formula (1), (2), or (X) in a solvent.

The solvent is determined based on, for example, the kind of the substituent used in Formula (1), (2), or (X), the kind of the solvent component used for producing the coloring composition, and the kind of fabric to be dyed. It is preferable that water or a water-soluble organic solvent is used.

Examples of the water-soluble organic solvent which may be included in the ink composition according to the present invention include a polyhydric alcohol such as diethylene glycol or glycerin, an amine, a monohydric alcohol, and a polyhydric alcohol alkyl ether. In addition, each compound which is described as an example of a water-miscible organic solvent in paragraph "0076" of JP2002-371079A is preferable.

The content of the organic solvent in the ink composition according to the present invention is preferably 10 mass% to 60 mass% with respect to the total mass of the ink composition for ink jet textile printing.

As the surfactant, any one of a cationic surfactant, an anionic surfactant, an amphoteric surfactant, and a nonionic surfactant can be used. Examples of the cationic surfactant include an aliphatic amine salt and an aliphatic quaternary ammonium salt. Examples of the anionic surfactant include a fatty acid soap and a N-acyl-N-methylglycine salt. Examples of the amphoteric surfactant include carboxy betaine, sulfo betaine, aminocarboxylate, and imidazolinium betaine. Examples of the nonionic surfactant include polyoxyethylene alkyl ether, acetylene glycol, and acetylene alcohol. A surfactant which is described as an example of a surface tension adjuster in paragraph "0073" of JP2002-371079A, or a surfactant which is described in JP2008-266466A or JP1999-2693929A (JP-H 11-2693929A) is preferably used.

In addition, the ink for ink jet textile printing according to the present invention optionally includes other additives within a range where the effects of the present invention do not deteriorate. Examples of the other additives include well-known additives such as an anti-drying agent (wetting agent), an anti-fading agent, an emulsion stabilizer, a penetration enhancer, a ultraviolet absorber, an infrared absorber, a preservative, a fungicide, a pH adjuster, a surface tension adjuster, a defoaming agent, a viscosity adjuster, a dispersant, a dispersion stabilizer, a rust inhibitor, a chelating agent, an anti-reducing agent, an antioxidant, an antistatic agent, and a fluorescence brightening agent. In the case of a water-soluble ink, these various additives are directly added to the ink solution. In a case where an oil-soluble dye is used in the form of a dispersion, in general, the additives are added to a dye dispersion after the preparation of the dispersion. However, the additives may be added in the form of an oil phase or an aqueous phase during the preparation. In a case where an oil-soluble dye is used in the form of a dispersion, a dispersant can be used. As the dispersant, for example, a dispersant described in pp. 216 to 222 of "Dyeing Note" can be used.

As the anti-drying agent, the anti-fading agent, the ultraviolet absorber, the fungicide, the pH adjuster, the surface tension adjuster, the defoaming agent, and the chelating agent, those described in paragraphs "0224" to "0231" of JP2014-5462A can be used. In addition, the ink for ink jet textile printing according to the present invention may also include a wet fastness improving agent described in JP1994-166969A (JP-H06-166969A) and a light fastness improving agent described in US5336443A.

The penetration enhancer is used in order to enhance the penetration of the ink for ink jet textile printing into the fiber and the fixing of the ink thereon. As the penetration enhancer, a well-known additive can be used. For example, a wetting agent, a penetrant, a level dyeing agent, a retarding agent, and an alcohol such as ethanol, isopropanol,

butanol, di(tri)ethylene glycol monobutyl ether, or 1,2-hexanediol described in pp. 223 to 255 of "Dyeing Note"; sodium lauryl sulfate, sodium oleate, a nonionic surfactant; or a branched polyhydric alcohol described in WO10/109867A or JP1994-57644A (JP-H06-57644A) can be used. Typically, these penetration enhancers function in a case where the addition thereof is 5 to 35 mass%. It is preferable that the penetration enhancer is used in an addition amount range where bleeding does not occur after dyeing and where ink leakage from a back surface does not occur.

In a case where the compound according to the present invention is dispersed in an aqueous medium, the compound can be dispersed using a method described in paragraphs "0232" to "0233" of JP2014-5462A.

In the present invention, the content of the compound represented by Formula (1), (2), or (X) in the coloring composition is determined based on, for example, the kind of the substituent used in Formula (1), (2), or (X), and the kind of the solvent component used for producing the coloring composition. The content of the compound represented by Formula (1), (2), or (X) in the coloring composition is preferably 1 to 20 mass% and more preferably 1 to 10 mass% with respect to the total mass of the coloring composition.

The viscosity of the ink for ink jet textile printing according to the present invention is preferably 30 mPa·s or lower. In addition, the surface tension of the ink for ink jet textile printing according to the present invention is preferably 25 mN/m to 70 mN/m. The viscosity and the surface tension can be adjusted by adding various additives such as a viscosity adjuster, a surface tension adjuster, a specific resistance adjuster, a film conditioner, a ultraviolet absorber, an antioxidant, an anti-fading agent, a fungicide, a rust inhibitor, a dispersant, and a surfactant.

The ink for ink jet textile printing according to the present invention can be used not only for forming a monochromic image but also forming a full-color image. In order to form a full-color image, a magenta ink, a cyan ink, and a yellow ink can be used. In addition, in order to adjust the color, a black ink may be further used. As the dye, a dye described in paragraphs "0237" to "0240" of JP2014-5462A can be used.

The ink for ink jet textile printing according to the present invention can be used as any one of various color inks but is preferably used as a magenta ink.

After drying, fabric which is printed using an ink jet method undergoes the color developing step, the washing step, and the drying step to obtain a printed material as in the case of other textile printing methods. A preferable method for performing the color developing step to the drying step is the same as in screen printing or the like.

The fabric used in the present invention is optionally pre-treated. The treatment may be performed before or after applying the paste to the fabric in the ink jet textile printing method. In addition, a pre-treatment agent may be added to the paste solution which applied before dyeing. Specific examples of a pre-treatment method include methods described in JP2002-339268A, JP2000-54277A, JP1995-150482A (JP-H07-150482A), JP2008-174865A, JP2012-154006A, JP2012-12730A, JP1990-68372A (JP-H02-68372A), JP1988-31594B (JP-S63-31594B), JP2002-275769A, JP2001-81680A, JP2004-68208A, JP1999-43873A (JP-H11-43873A), JP2007-217829A, JP2006-83495A, JP2005-154936A, JP2002-105875A, JP2002-348786A, JP1999-81163A (JP-H11-81163A), JP1990-61183A (JP-H02-61183A), JP2001-295186A, JP2004-60073A, JP2003-113583A, JP1996-100379A (JP-H08-100379A), JP1990-53976A (JP-H02-53976A), JP2000-226781A, JP2004-292989A, JP2002-249991A, JP2002-363872A, JP1994-341070A (JP-H06-341070A), JP2004-197237A, JP2008-223192A, and JP2011-179130A.

On the fabric used in the present invention, optionally, a flame-retardant treatment described JP1987-257464A (JP-S62-257464A), a plasma treatment JP1990-47378A (JP-H02-47378A), or a treatment for improving fastness such as light fastness, wet fastness, or chlorine fastness described in JP1985-94678A (JP-S60-94678A), JP2002-266236A, JP2007-321247A, JP1991-287873A (JP-H03-287873A), or JP2004-131919A is performed. These treatments may be performed before or after dyeing.

A method for ink jet textile printing in which the ink according to the present invention is used is not particularly limited as long as it includes a step of jetting the ink on fabric using an ink jet device. For example, methods for ink jet textile printing described in JP1997-296379A (JP-H09-296379A), JP1999-43873A (JP-H11-43873A), JP1995-70953A (JP-H07-70953A), JP1995-197384A (JP-H07-197384A), JP1995-70950A (JP-H07-70950A), JP1991-104977A (JP-H03-104977A), JP2007-303046A, JP2007-313717A, and JP2008-248437A are known.

In addition, as a device for ink jet textile printing, an arbitrary ink jet device can be used. For example, methods described in JP1991-45774A (JP-H03-45774A), JP2001-277656A, JP2000-290882A, JP2001-18390A, JP2010-83040A, and JP2011-31418A are known.

[Form of Coloring Compound and Fabric to be Dyed]

The compound represented by Formula (1), (2), or (X) is used as a dye to dye or print fabric.

By changing the kind of the substituent of the compound represented by Formula (1), (2), or (X), various kinds of dyes can be prepared.

In a case where the compound represented by Formula (1), (2), or (X) includes at least one acidic group such as a sulfo group or a carboxyl group, an acid dye is prepared such that a protein fiber such as silk or wool or a polyamide fiber such as 6 nylon or 66 nylon can be dyed.

In a case where the compound represented by Formula (1), (2), or (X) is an oil-soluble compound which is insoluble in water, a disperse dye is prepared such that a hydrophobic fiber such as polyester can be generally dyed but an acrylic fiber or a polyamide fiber can also be dyed.

In a case where the compound represented by Formula (1), (2), or (X) includes at least one basic group such as an amino group, a cationic dye is prepared such that an acrylic fiber can be dyed.

In a case where the compound represented by Formula (1), (2), or (X) includes at least one group which is reactive with a fiber, a reactive dye is prepared such that a cellulose fiber such as cotton, or a polyamide fiber can be dyed with this compound. Specific examples of the group which is reactive with a fiber include a chlorotriazinyl group, a chloropyrimidyl group, a vinylsulfonyl group, a chloroethylsulfonyl group, a sulfatoethylsulfonyl group, and a thiosulfatoethylsulfonyl group.

As the fabric, fabric made of one fiber may be used, or a composite fiber made of two or more fibers may be used.

It is preferable that the compound represented by Formula (1), (2), or (X) is an acid dye. In particular, when a polyamide fiber is dyed with this acid dye, excellent fixing properties can be obtained, and various performances of dyed fabric such as light fastness or wet fastness can be improved.

A polyamide fiber which is preferable for fabric to be dyed is not particularly limited as long as it includes a polyamide fiber. Fabric made of only polyamide may be used, fabric made of a composite fiber may be used. Examples of the composite fiber include fibers described in JP2008-202210A, JP2006-322131A, and JP2007-100270A. Among these polyamide fibers, fibers including 6 nylon and 66 nylon are preferable.

As the fiber to be used, fabric is preferable. However, even in a case where yarn is dyed, the same effects can be obtained.

[Examples]

Hereinafter, the present invention will be described using examples, but the present invention is not limited to these examples. Unless specified otherwise, "%" and "part(s)" represent "mass%" and "part(s) by mass".

(Synthesis Examples)

(Synthesis of Exemplary Compound (1-4))

Exemplary Compound (1-4) can be synthesized, for example, using the following scheme.

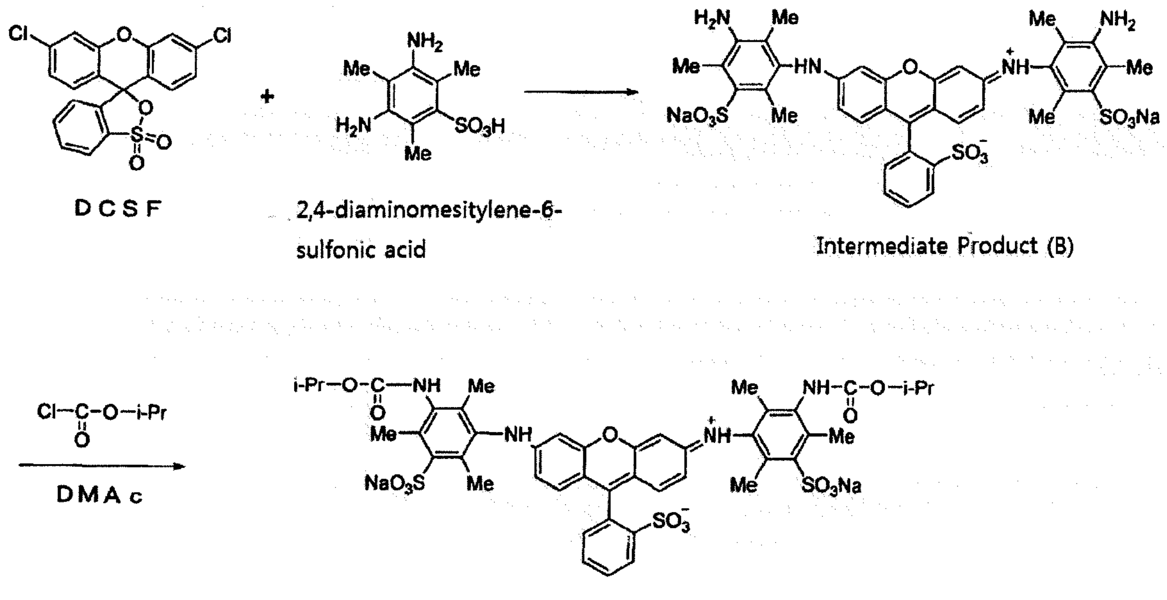


DCSF

2,4-diaminomesitylene-6-sulfonic acid

Intermediate Product (B)

Exemplary Compound (1-4)

[Synthesis of Intermediate Product (B)]

20 g of DCSF (trade name, manufactured by Chugai kasei Co.,Ltd.), 46 g of 2,4-diaminomesitylene-6-sulfonic acid, 30 g of diazabicycloundecene (DBU), and 6.7 g of zinc chloride were added to 250 g of ethylene glycol to cause

a reaction to occur at 150°C for 6 hours. The obtained reaction solution was cooled to room temperature and was poured into 1 L of acetonitrile. Crystals were separated by filtering and were purified by column chromatography (filler: SEPHADEX LH-20 (manufactured by Pharmacia), developing solvent: water/methanol) to obtain Intermediate Product (B).

Yield amount: 7.7 g
Yield ratio: 19%

MS (m/z)=836 ([M-1]-, 100%)

(Synthesis of Exemplary Compound (1-4))

3.0 g of Intermediate Product (B) was dissolved in 40 mL of N,N-dimethylacetamide (DMAc), and the solution was cooled such that the internal temperature thereof reached 10°C or lower. 1.76 g of isopropyl chloroformate (manufactured by Tokyo Chemical Industry Co., Ltd.) was added dropwise while maintaining the internal temperature thereof at 10°C or lower. The reaction solution was increased to 23°C again and was stirred for 2 hours. The obtained reaction solution was poured into a large excess of ethyl acetate, and deposited solid was separated by filtering. The obtained solid was dissolved in 25 mL of water, and the pH thereof was adjusted to 7 using a sodium hydroxide aqueous solution. The obtained aqueous solution was purified by column chromatography (filler: SEPHADEX LH-20 (manufactured by Pharmacia), developing solvent: water/methanol). Next, an inorganic salt and a residual organic solvent were removed using a dialysis membrane (molecular weight cutoff: 3500, Spectra/Por 3 Dialysis Membrane (trade name, manufactured by Spectrum, Inc.)). The pH of the obtained aqueous solution was adjusted to 7 again using a diluted sodium hydroxide aqueous solution, and dust was removed by filtering using a membrane filter. The obtained aqueous solution was condensed and dried using a rotary evaporator. As a result, crystals of Exemplary Compound (1-4) were obtained.

Yield amount: 2.5 g
Yield ratio: 69%

MS (m/z)=1008 ([M-1]$^-$, 100%)

In an absorption spectrum of Exemplary Compound (1-4) in the dilute aqueous solution, the absorption maximum was 530 nm, and the molecular absorption coefficient was 57000.

(Synthesis of Exemplary Compound (1-5))

Exemplary Compound (1-5) can be synthesized, for example, using the following scheme.

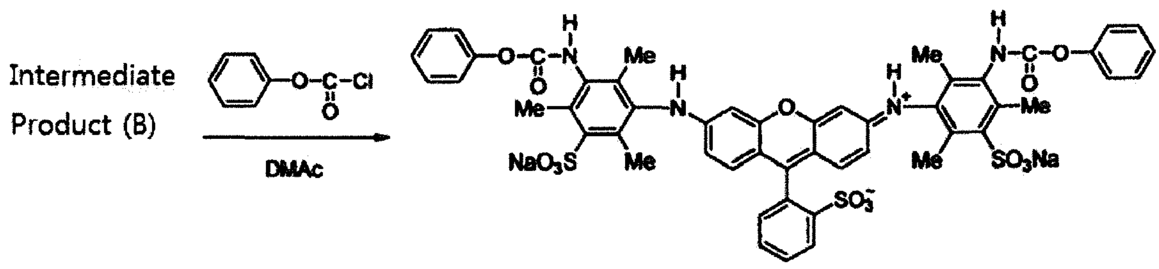


Exemplary Compound (1-5)

20 g of Intermediate Product (B) obtained as the synthetic intermediate product of Exemplary Compound (1-4) described above was dissolved in 120 mL of N,N-dimethylacetamide (DMAc), and the solution was cooled such that the internal temperature thereof reached 0°C. 10 mL of phenyl chloroformate (manufactured by Tokyo Chemical Industry Co., Ltd.) was added dropwise while maintaining the internal temperature thereof at 5°C or lower, and then a reaction was caused to occur at 0°C to 5°C for 90 minutes. The obtained reaction solution was poured into 1500 mL of ethyl acetate, and deposited crystals were separated by filtering. The obtained crystals were dissolved in 200 mL of water, and the pH thereof was adjusted to 7 using a diluted sodium hydroxide aqueous solution. The obtained aqueous solution was purified by column chromatography (filler: SEPHADEX LH-20 (manufactured by Pharmacia), developing solvent: water/methanol). The aqueous solution was condensed using a rotary evaporator, was dissolved in water again, and then was caused to pass through a strong acid ion exchange resin (AMBERLITE IR124-H (trade name), manufactured by Organo Corporation). Next, the pH of the aqueous solution was adjusted to 7 using a diluted sodium hydroxide

aqueous solution, and dust was removed by filtering using a membrane filter. Next, the aqueous solution was condensed and dried using a rotary evaporator. As a result, a green glossy solid of Exemplary Compound (1-5) were obtained.

Yield amount: 24 g
Yield ratio: 93%

MS (m/z)=1054 ($[M-Na]^-$, 100%)
In an absorption spectrum of Exemplary Compound (1-5) in the dilute aqueous solution, the absorption maximum was 531 nm.

(Synthesis of Exemplary Compound (1-10))

Exemplary Compound (1-10) can be synthesized, for example, using the following scheme.

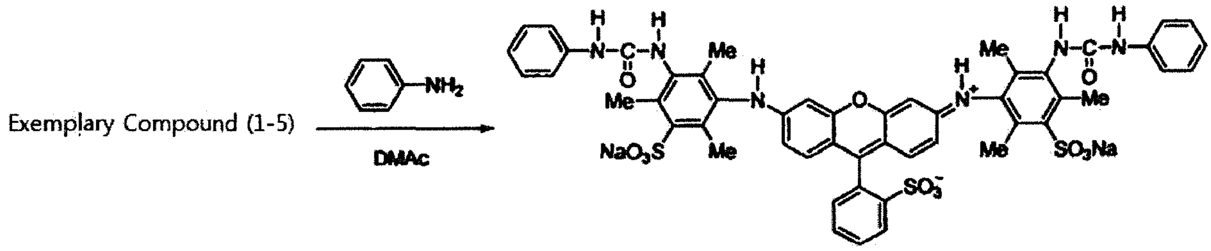


Exemplary Compound (1-10)

5.4 g of Exemplary Compound (1-5) was dissolved in 54 mL of N,N-dimethylacetamide (DMAc), 1.9 g of aniline (manufactured by Tokyo Chemical Industry Co., Ltd.) was added, and a reaction was caused to occur at an internal temperature of 100°C for 8 hours. The obtained reaction solution was poured into 500 mL of ethyl acetate, and deposited crystals were separated by filtering. The obtained crystals were dissolved in 100 mL of water, and the pH thereof was adjusted to 7 using a diluted sodium hydroxide aqueous solution. The obtained aqueous solution was purified by column chromatography (filler: SEPHADEX LH-20 (manufactured by Pharmacia), developing solvent: water/methanol). The aqueous solution was condensed using a rotary evaporator, was dissolved in water again, and then was caused to pass through a strong acid ion exchange resin (AMBERLITE IR124-H (trade name), manufactured by Organo Corporation). Next, the pH of the aqueous solution was adjusted to 7 using a diluted sodium hydroxide aqueous solution, and dust was removed by filtering using a membrane filter. Next, the aqueous solution was condensed and dried using a rotary evaporator. As a result, a green glossy solid of Exemplary Compound (1-10) were obtained.

Yield amount: 2.8 g
Yield ratio: 48%

MS (m/z)=1051 ($[M-Na]^-$, 100%)
In an absorption spectrum of Exemplary Compound (1-10) in the dilute aqueous solution, the absorption maximum was 532 nm.

(Synthesis of Exemplary Compound (1-13) and Exemplary Compound (1-37))

Exemplary Compound (1-13) and Exemplary Compound (1-37) can be synthesized, for example, using the following scheme.

Exemplary Compound (1-5)

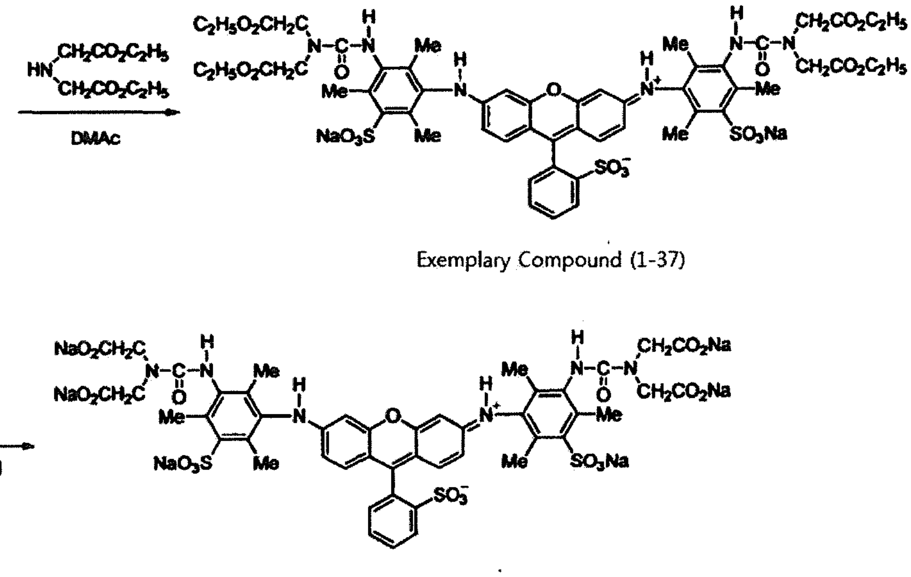


Exemplary Compound (1-37)

Exemplary Compound (1-13)

[Synthesis of Exemplary Compound (1-37)]

5.4 g of Exemplary Compound (1-5) was dissolved in 54 mL of N,N-dimethylacetamide (DMAc), 5.0 g of diethyl iminodiacetate (manufactured by Tokyo Chemical Industry Co., Ltd.) was added, and a reaction was caused to occur at an internal temperature of 120°C for 8 hours. The obtained reaction solution was poured into 500 mL of ethyl acetate, and deposited crystals were separated by filtering. The obtained crystals were dissolved in 100 mL of water, and the pH thereof was adjusted to 7 using a diluted sodium hydroxide aqueous solution. The obtained aqueous solution was purified by column chromatography (filler: SEPHADEX LH-20 (manufactured by Pharmacia), developing solvent: water/methanol). The aqueous solution was condensed using a rotary evaporator, was dissolved in water again, and then was caused to pass through a strong acid ion exchange resin (AMBERLITE IR124-H (trade name), manufactured by Organo Corporation). Next, the pH of the aqueous solution was adjusted to 7 using a diluted sodium hydroxide aqueous solution, and dust was removed by filtering using a membrane filter. Next, the aqueous solution was condensed and dried using a rotary evaporator. As a result, a green glossy solid of Exemplary Compound (1-37) were obtained.

Yield amount: 3.0 g
Yield ratio: 48%

MS (m/z)=1244 ($[M-Na]^-$, 100%)

In an absorption spectrum of Exemplary Compound (1-37) in the dilute aqueous solution, the absorption maximum was 533 nm.

[Synthesis of Exemplary Compound (1-13)]

3.0 g of Exemplary Compound (1-37) was dissolved in 100 mL of water, and the pH thereof was adjusted to 12 to 13 using a sodium hydroxide aqueous solution. The aqueous solution was stirred at 23°C for 1 hour, and the pH thereof was adjusted to 8.0 using dilute hydrochloric acid. The obtained aqueous solution was purified by column chromatography (filler: SEPHADEX LH-20 (manufactured by Pharmacia), developing solvent: water/methanol). The aqueous solution was condensed using a rotary evaporator, was dissolved in water again, and then was caused to pass through a strong acid ion exchange resin (AMBERLITE IR124-H (trade name), manufactured by Organo Corporation). Next, the pH of the aqueous solution was adjusted to 7 using a diluted sodium hydroxide aqueous solution, and dust was removed by filtering using a membrane filter. Next, the aqueous solution was condensed and dried using a rotary evaporator. As a result, a green glossy solid of Exemplary Compound (1-13) were obtained.

Yield amount: 2.0 g
Yield ratio: 57%

MS (m/z)=1219 ($[M-Na]^-$, 100%)

In an absorption spectrum of Exemplary Compound (1-13) in the dilute aqueous solution, the absorption maximum was 533 nm.

(Synthesis of Exemplary Compound (1-27))

Exemplary Compound (1-27) can be synthesized, for example, using the following scheme.

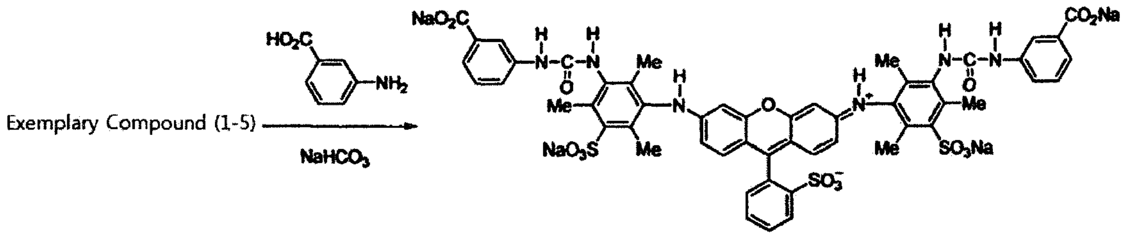


Exemplary Compound (1-27)

5.4 g of Exemplary Compound (1-5) was dissolved in 20 mL of water and 40 mL of methanol, 2.0 g of m-aminobenzoic acid (manufactured by Tokyo Chemical Industry Co., Ltd.) and 2.0 g of sodium bicarbonate were added, and a reaction was caused to occur at an internal temperature of 80°C for 6 hours. The obtained reaction solution was poured into 500 mL of 2-propanol, and deposited crystals were separated by filtering. The obtained crystals were dissolved in 100 mL of water, and the pH thereof was adjusted to 7 using a diluted sodium hydroxide aqueous solution. The obtained aqueous solution was purified by column chromatography (filler: SEPHADEX LH-20 (manufactured by Pharmacia), developing solvent: water/methanol). The aqueous solution was condensed using a rotary evaporator, was dissolved in water again, and then was caused to pass through a strong acid ion exchange resin (AMBERLITE IR124-H (trade name), manufactured by Organo Corporation). Next, the pH of the aqueous solution was adjusted to 7 using a diluted sodium hydroxide aqueous solution, and dust was removed by filtering using a membrane filter. Next, the aqueous solution was condensed and dried using a rotary evaporator. As a result, a green glossy solid of Exemplary Compound (1-27) were obtained.

Yield amount: 2.5 g
Yield ratio: 41%

MS (m/z)=1183 ([M-Na]$^-$, 100%)

In an absorption spectrum of Exemplary Compound (1-27) in the dilute aqueous solution, the absorption maximum was 533 nm.

(Synthesis of Exemplary Compound (1-29))

Exemplary Compound (1-29) was synthesized using the same method as that of Exemplary Compound (1-27), except that m-aminobenzoic acid was changed to 5-aminosalicylic acid.

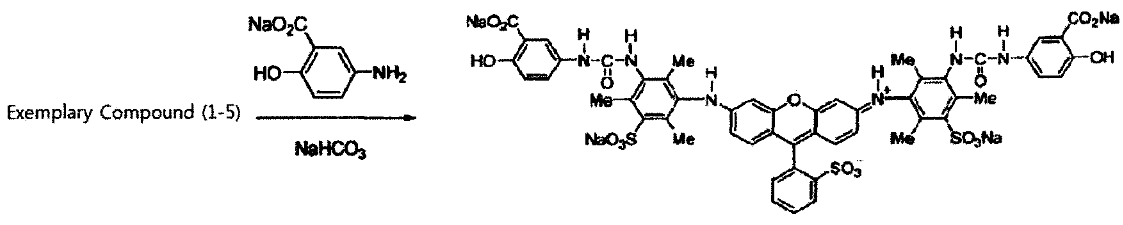


Exemplary Compound (1-29)

(Synthesis of Exemplary Compound (1-20))

Exemplary Compound (1-20) can be synthesized, for example, using the following scheme.

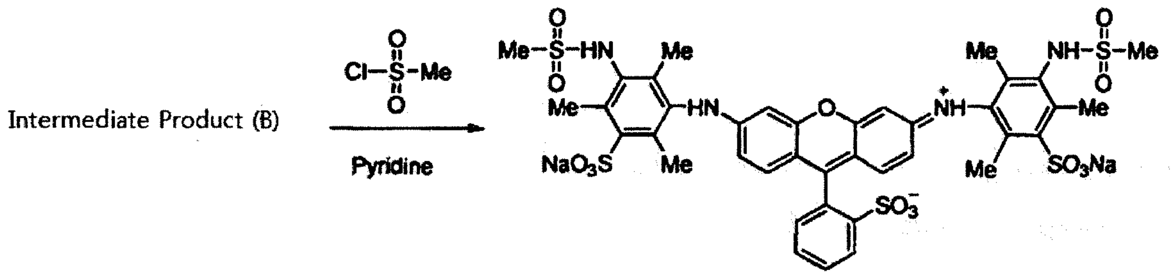


Exemplary Compound (1-20)

4 g of Intermediate Product (B) obtained as the synthetic intermediate product of Exemplary Compound (1-4) described above was added to 2.0 g of methanesulfonyl chloride, 8 mL of pyridine was slowly added dropwise, and a reaction was caused to occur at 23°C for 3 hours. The reaction solution was poured into a large excess of ethyl acetate, and deposited crystals was separated by filtering. The obtained crystals were dissolved in 50 mL of water, and the pH thereof was adjusted to 7 using a diluted sodium hydroxide aqueous solution. The obtained aqueous solution was purified by column chromatography (filler: SEPHADEX LH-20 (manufactured by Pharmacia), developing solvent: water/methanol). As a result, green glossy crystals of Exemplary Compound (1-20) were obtained.

Yield amount: 3.0 g
Yield ratio: 63%

MS (m/z)=993 ([M-1]$^-$, 100%)
In an absorption spectrum of Exemplary Compound (1-20) in the dilute aqueous solution, the absorption maximum was 533 nm, and the molecular absorption coefficient was 54000.

(Synthesis of Exemplary Compound (1-18))

Exemplary Compound (1-18) can be synthesized, for example, using the following scheme.

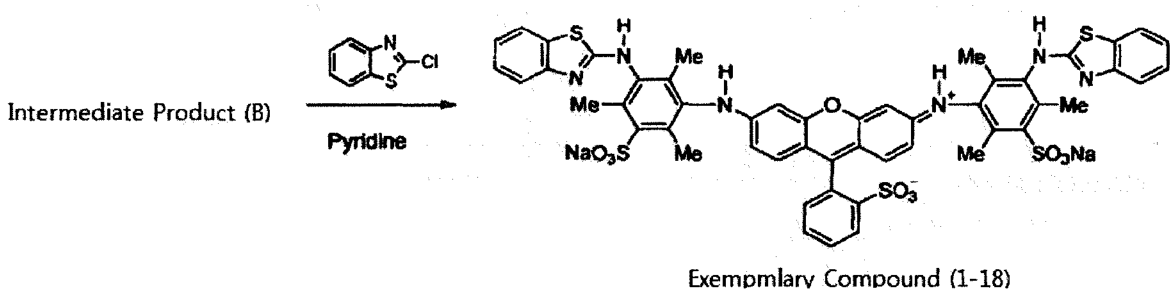


Exempmlary Compound (1-18)

4 g of Intermediate Product (B) obtained as the synthetic intermediate product of Exemplary Compound (1-4) described above was added to 1.2 g of 2-chlorobenzothiazole, 8 mL of pyridine was slowly added dropwise, and a reaction was caused to occur at 23°C for 3 hours. The reaction solution was poured into a large excess of ethyl acetate, and deposited crystals was separated by filtering. The obtained crystals were dissolved in 50 mL of water, and the pH thereof was adjusted to 7 using a diluted sodium hydroxide aqueous solution. The obtained aqueous solution was purified by column chromatography (filler: SEPHADEX LH-20 (manufactured by Pharmacia), developing solvent: water/methanol). As a result, green glossy crystals of Exemplary Compound (1-18) were obtained.

Yield amount: 2.9 g
Yield ratio: 55%

MS (m/z)=1102 ([M-1]$^-$, 100%)
In an absorption spectrum of Exemplary Compound (1-18) in the dilute aqueous solution, the absorption maximum was 533 nm.

(Synthesis of Exemplary Compound (2-6))

Exemplary Compound (2-6) can be synthesized, for example, using the following scheme.

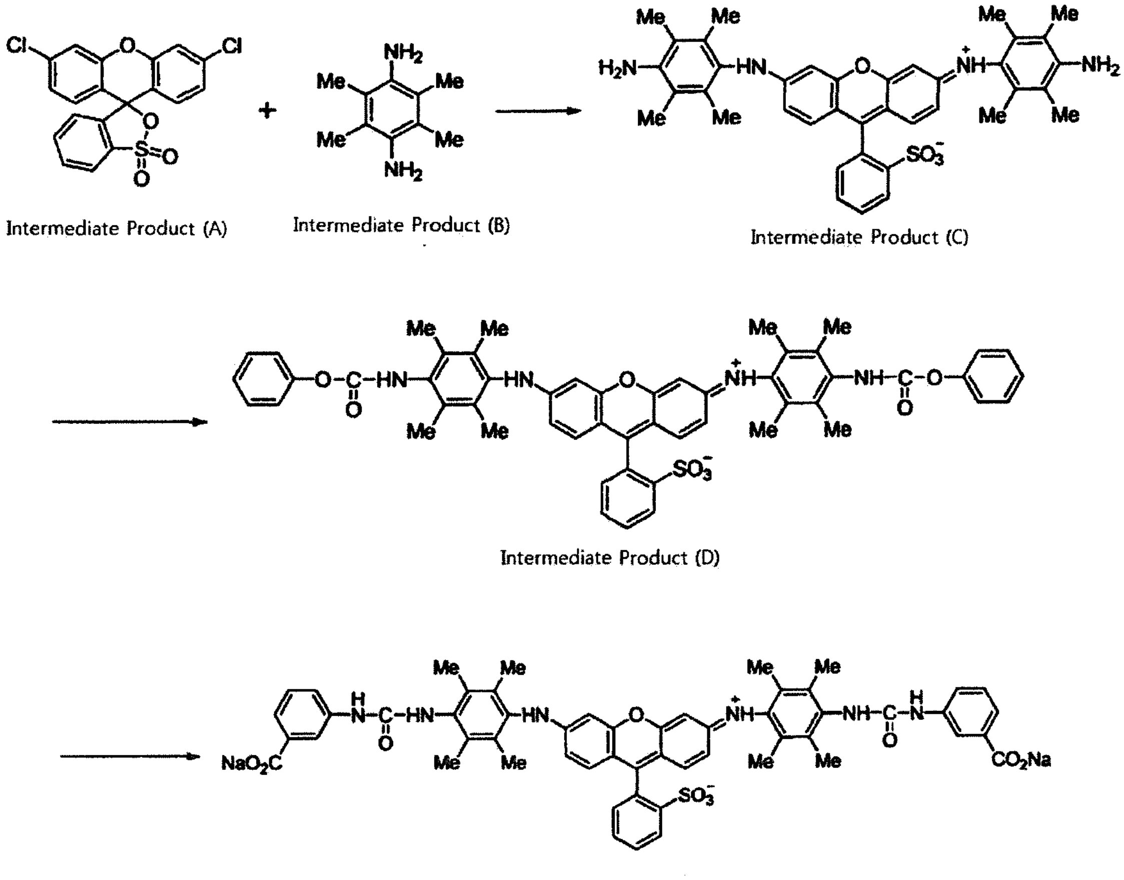

Intermediate Product (A)

Intermediate Product (B)

Intermediate Product (C)

Intermediate Product (D)

Exemplary Compound (2-6)

[Synthesis of Intermediate Product (C)]

4.1 g of Intermediate Product (A) (DCSF, trade name, manufactured by Chugai kasei Co.,Ltd.), 10.8 g of Intermediate Product (B) (catalog No. T1457, manufactured by Tokyo Chemical Industry Co., Ltd.), 1.4 g of anhydrous zinc chloride, 3.9 g of quinoline, and 40 mL of sulfolane were caused to react with each other at an internal temperature of 200°C for 3 hours. The obtained reaction solution was cooled to 23°C and was poured into 400 mL of dilute hydrochloric acid, and deposited crystals were separated by filtering. The obtained crystals were heated and stirred in 250 mL of acetonitrile at 50°C, and crystals were separated by filtering. The obtained crystals were dried at 60°C for 8 hours. As a result, green glossy crystals of Intermediate Product (C) were obtained.

Yield amount: 6.0 g

MS (m/z)=660 ($M^+$, 100%)

[Synthesis of Intermediate Product (D)]

3.3 g of Intermediate Product (C) was dissolved in 33 mL of N,N-dimethylformamide, and the solution was cooled such that the internal temperature thereof reached 5°C. 6 mL of phenyl chloroformate (catalog No. C0649, manufactured by Tokyo Chemical Industry Co., Ltd.) was added slowly dropwise at an internal temperature of at 10°C or lower, and then a reaction was caused to occur at at an internal temperature of 5°C to 10°C for 2 hours. The obtained reaction solution was poured into 300 mL of ethyl acetate, and deposited crystals were separated by filtering. The obtained crystals were dried at 60°C for 8 hours. As a result, green glossy crystals of Intermediate Product (D) were obtained.

Yield amount: 4.3 g

MS (m/z)=902 ([M+1]$^+$, 100%)

(Synthesis of Exemplary Compound (2-6))

4.0 g of Intermediate Product (D) was dissolved in 40 mL of N,N-dimethylacetamide, 3.0 g of m-aminobenzoic acid (catalog No. A0268, manufactured by Tokyo Chemical Industry Co., Ltd.) and 1.0 g of sodium bicarbonate were added, and a reaction was caused to occur at 60°C for 6 hours. The obtained crystals were poured into 400 mL of water, the pH thereof was adjusted to 2 using concentrated hydrochloric acid, and deposited crystals were separated by filtering. The obtained crystals were added to 80 mL of water, and the pH thereof was adjusted to 8.0 using a sodium hydroxide aqueous solution. Insoluble matter was removed by filtering (using Quantitative filter paper 131, manufactured by Advantech Co., Ltd.). The obtained aqueous solution was purified by column chromatography (filler: SEPHADEX LH-20 (manufactured by Pharmacia), developing solvent: methanol/water=1/1 (v/v)). As a result, Exemplary Compound (2-6) was obtained.

Yield amount: 4.0 g

MS (m/z)=1004 ([M-Na]$^-$, 100%)

In a visible absorption spectrum of Exemplary Compound (2-6) in the dilute aqueous solution, the absorption maximum was 534 nm.

[Dip Dyeing Evaluation]

Nylon 6 jersey (manufactured by Shikisensha Co., Ltd.; fabric described below was manufactured by Shikisensha Co., Ltd.) as fabric was dipped in 150 g of a dye bath including 1.5 g of a dye, 0.2 g of acetic acid, and water as shown in Table 1, was heated to 98°C for 40 minutes, and was dyed at the same temperature for 30 minutes. After dyeing, the nylon 6 jersey was slowly cooled to 60°C and was washed with water. After dyeing, the evaluation results are shown in Table 1.

**Acid Red 289**

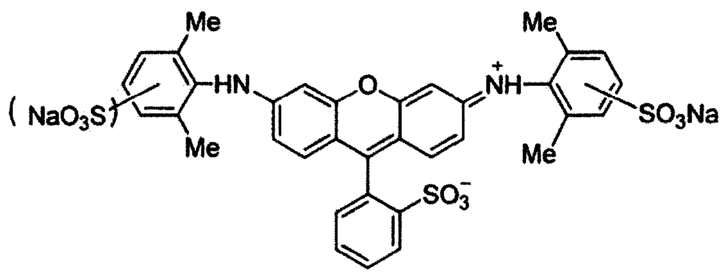

**Acid Red 131**

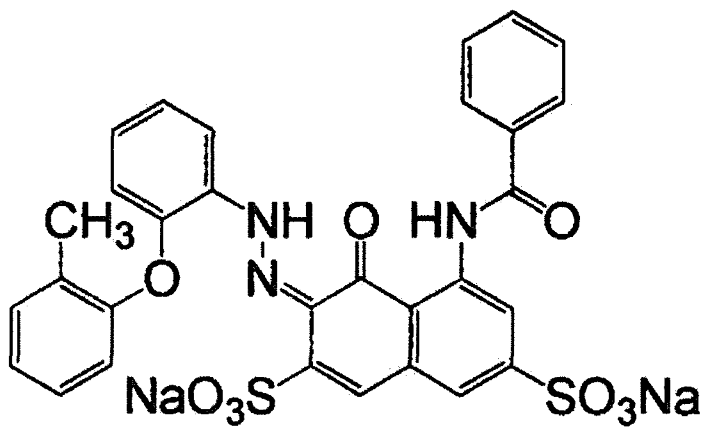

[Evaluation Method]

1. Color

The color of the dyed fabric was observed by visual inspection.

2. Evaluation of Color Optical Density (OD Value)

Using a spectrodensitometer("X-rite 938", manufactured by X-rite Inc.), the CMYK density of the dyed fabric was measured under conditions of a density filter (ISO status A), density white base (absolute white base), no polarization filter, and an observer angle of 2° such that the reflection density of magenta (M) was measured as OD-Magenta.

3. Light Fastness Evaluation

Using Xenon Fade-OMeter, dyed samples prepared according to ISO 105-B02 were irradiated with xenon light for 6 hours.

Before and after the irradiation of the xenon light, the lightness value L* and the chroma values a* and b* of each of the samples in the CIE L*a*b* color space (International Commission on illumination (1976)/JIS Z8781-4:2013) were measured using spectrodensitometer ("X-rite 938", manufactured by X-rite Inc.), and ΔEab as a color difference between two samples was obtained based on ΔL*, Δa*, and Δb* which were differences between coordinate values L*, a*, and b* in the L*a*b* color space. A lower value represents that the behavior before and after the light irradiation is small and excellent.

$$\text{Color Difference } \Delta Eab=(\Delta L^{*2}+\Delta a^{*2}+\Delta b^{*2})^{0.5}$$

[Table 1]

| | Dye | Color | OD | Light Fastness ΔEab |
|---|---|---|---|---|
| Example 1 | Exemplary Compound (1-38) | Magenta | 1.4 | 10 |
| Example 2 | Exemplary Compound (1-4) | Magenta | 1.4 | 7 |
| Comparative Example 1 | Acid Red 289 | Magenta | 1.1 | 14 |
| Comparative Example 2 | Acid Red 131 | Reddish Magenta | 1.3 | 7 |

[Textile Printing Evaluation]

A solid image was printed on the nylon 6 jersey as the fabric with the following printing paste using a screen printing machine.

Printing Paste

·Paste: MEYPRO GUM NP [manufactured by Mayhall Chemical AG] 50 g
·pH Adjuster: ammonium sulfate (manufactured by Wako Pure Chemical Industries, Ltd.) 5 g
·Colorant: dye shown in Table 2 2g
·Water 43 g

The printed fabric was dried and then was treated with saturated steam at 105°C. Next, the fabric was washed with water to wash off a non-fixed portion of the dye. A fixing treatment was performed on the printed fabric in a 200 mL bath including 0.1 g of acetic acid, 0.6 g of ammonium sulfate, and 6 g of SUNLIFE TN (a fixing agent, manufactured by Nicca Chemical Co., Ltd.) at 60°C for 5 minutes, and the printed fabric was dried. As a result, a dyed material was obtained. The evaluation results of the dyed material are shown in Table 2.

[Table 2]

| | Dye | OD | Bleeding | Light Fastness ΔEab |
|---|---|---|---|---|
| Example 3 | Exemplary Compound (1-38) | 1.4 | A | 9 |
| Example 4 | Exemplary Compound (1-4) | 1.4 | A | 6 |
| Example 5 | Exemplary Compound (1-5) | 1.4 | A | 6 |
| Example 6 | Exemplary Compound (1-10) | 1.4 | A | 6 |
| Example 7 | Exemplary Compound (1-13) | 1.4 | A | 6 |
| Example 8 | Exemplary Compound (1-27) | 1.4 | A | 6 |
| Example 9 | Exemplary Compound (1-29) | 1.4 | A | 5 |
| Example 10 | Exemplary Compound (1-20) | 1.4 | A | 6 |
| Example 11 | Exemplary Compound (1-18) | 1.4 | A | 6 |
| Example 12 | Exemplary Compound (2-6) | 1.4 | A | 6 |
| Example 13 | Exemplary Compound (3-1) | 1.4 | A | 8 |
| Comparative Example 3 | Acid Red 289 | 1.1 | B | 12 |

[Evaluation Method]

1. Evaluation of Color Optical Density (OD Value)

The printed solid image was evaluated using the same method as in the dip dyeing evaluation described above.

2. Bleeding Evaluation

In the bleeding evaluation, a printing sample in which a character "Title" having a size of 1 cmx 1 cm was printed instead of printing the solid image was evaluated by visual inspection based on the following criteria.

A: bleeding was not able to be visually recognized, and the character was clearly legible
B: bleeding was recognized, and the character was slightly illegible

In addition, the same results were obtained when a character "VIII" was printed instead of printing "Title" and was evaluated using the above-described method.

3. Light Fastness Evaluation

The printed solid image was evaluated using the same method as in the dip dyeing evaluation described above.
Separately, by using fabric made of silk, fabric made of wool, or nylon 66 jersey as the fabric instead of the nylon 6 jersey, textile printing was performed using the same method as described above. At this time, a dyed material which was dyed with magenta with a high density was obtained without color loss after water washing, and light fastness and wet fastness were also excellent.

[Ink Jet Textile Printing Evaluation]

Inkjet textile printing was performed using a method described in JP2013-209786A.

<Pre-Treatment Step>

Regarding the nylon 6 jersey as the fabric, the following components were mixed with each other to prepare Pre-Treatment Agent A. The fabric was padded with Pre-Treatment Agent A obtained above at a squeezing rate of 90% and was naturally dried. As a result, pre-treated fabric was obtained.

(Pre-Treatment Agent A)

·Paste: guar gum (MEYPRO GUM NP, manufactured by Nissho Corporation) 2 g
·Hydrotropy agent: urea (manufactured by Wako Pure Chemical Industries, Ltd.) 5 g
·pH adjuster: ammonium sulfate (manufactured by Wako Pure Chemical Industries, Ltd.) 4 g
·Water 89 g

<Printing Step>

Next, an ink composition having the following composition was stirred for 1 hour while heated at 30°C to 40°C. The obtained solution was filtered under reduced pressure through a microfilter having an average pore size of 0.5 μm. As a result, an ink for ink jet textile printing was prepared.

·Dye shown in Table 3 5 mass%
·Glycerin (manufactured by Wako Pure Chemical Industries, Ltd.; aqueous organic solvent) 10 mass%
·Diethylene glycol (manufactured by Wako Pure Chemical Industries, Ltd.; aqueous organic solvent) 10 mass%

- Olefin E1010 (acetylenic glycol surfactant; manufactured by Nissin Chemical Co., Ltd.) 1 mass%
- Water 74 mass%

After setting each of the obtained ink solutions for ink jet textile printing in an ink jet printer (DMP-2381, manufactured by Dimatix Inc.), a solid image was printed on the pre-treated fabric.

<Post-Treatment Step>

After drying the printed fabric, saturated steam was applied to the printed fabric at 100°C for 30 minutes in a steam treatment such that the dye was fixed on the fiber of the fabric. Next, the fabric was washed with cold water for 10 minutes, was washed with warm water at 60°C for 5 minutes, and then was naturally dried.

[Table 3]

| | Dye | OD | Bleeding | Light Fastness ΔEab |
|---|---|---|---|---|
| Example 14 | Exemplary Compound (1-38) | 1.4 | B | 9 |
| Example 15 | Exemplary Compound (1-4) | 1.4 | A | 6 |
| Example 16 | Exemplary Compound (1-5) | 1.4 | A | 6 |
| Example 17 | Exemplary Compound (1-10) | 1.4 | A | 6 |
| Example 18 | Exemplary Compound (1-13) | 1.4 | A | 6 |
| Example 19 | Exemplary Compound (1-27) | 1.4 | A | 6 |
| Example 20 | Exemplary Compound (1-29) | 1.4 | A | 5 |
| Example 21 | Exemplary Compound (1-20) | 1.4 | A | 6 |
| Example 22 | Exemplary Compound (1-18) | 1.4 | A | 6 |
| Example 23 | Exemplary Compound (2-6) | 1.4 | A | 6 |
| Example 24 | Exemplary Compound (3-1) | 1.4 | A | 8 |
| Comparative Example 4 | Acid Red 289 | 1.1 | C | 12 |

In a case where the inks used in Examples 14 to 24 and Comparative Example 4 were printed on paper instead of nylon, no bleeding occurred in all the examples.

[Evaluation Method]

1. Evaluation of Color Optical Density (OD Value)

The printed solid image was evaluated using the same method as in the dip dyeing evaluation described above.

2. Bleeding Evaluation

In the bleeding evaluation, a printing sample in which a character "A" and a character "Title" were printed on the pre-treated fabric under conditions of font size: 10 and font: Gothic instead of printing the solid image was evaluated by visual inspection based on the following criteria. An allowable range is B or higher. A contour portion of the image of the printing sample was observed by visual inspection to determine whether or not bleeding occurred.

A: bleeding was not able to be visually recognized, and the characters "A" and "Title" were clearly legible
B: a small amount of bleeding was recognized, and the character "Title" was illegible
C: bleeding was recognized, and the characters "A" and "Title" were illegible

In addition, the same results were obtained when a character "III" and a character "VIII" were printed instead of printing "A" and "Title" and were evaluated using the above-described method.

3. Light Fastness Evaluation

The printed solid image was evaluated using the same method as in the dip dyeing evaluation described above.
Separately, by using fabric made of silk, fabric made of wool, or nylon 66 jersey as the fabric instead of the nylon 6 jersey, ink jet textile printing was performed on each of the fabrics using the method described in JP2013-209786A. At this time, a dyed material which was dyed with magenta with a high density was obtained without color loss after water washing, and light fastness and wet fastness were also excellent.

[Industrial applicability]

According to the present invention a coloring composition for dyeing or textile printing having an excellent color, a high color optical density, reduced bleeding, and excellent light fastness can be provided. In addition, an ink for ink jet textile printing including the above-described coloring composition for dyeing or textile printing, a method of printing on fabric, and a dyed or printed fabric can be provided.
The present invention has been described in detail with reference to the specific embodiment. However, it is obvious to those skilled in the art that various modifications and changes can be made within a range not departing from the scope of the present invention.
The present application is based on Japanese Patent Application (JP2014-129598) filed on June 24, 2014, the entire content of which is incorporated herein by reference.

## Claims

1. A coloring composition for dyeing or textile printing comprising a compound represented by the following Formula (1), (2), or (X),

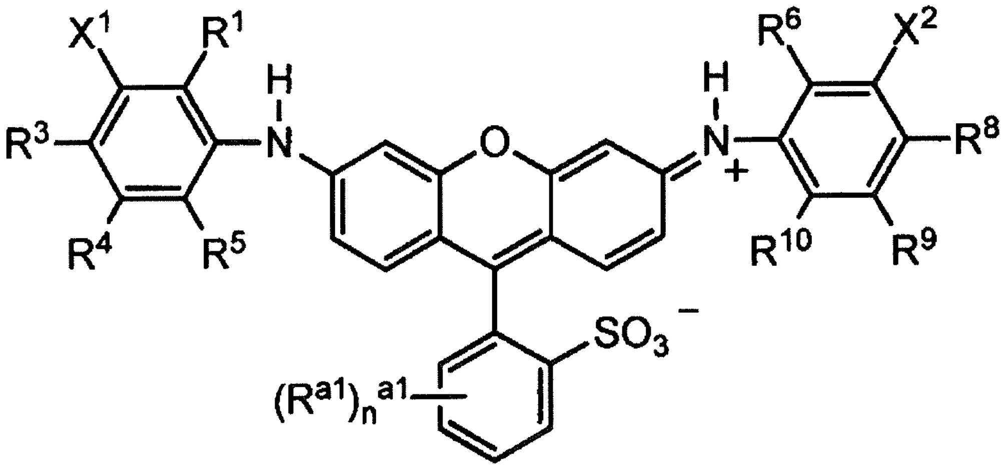

(1)

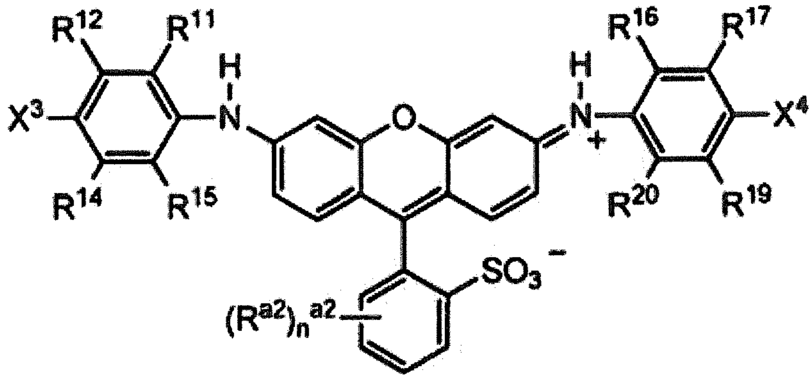

(2)

Formula (X) D-$(SO_3M)_4$

in Formula (1) or (2), $R^3$, $R^4$, $R^8$, $R^9$, $R^{12}$, $R^{14}$, $R^{17}$, and $R^{19}$ each independently represent a hydrogen atom or a substituent,
$R^1$, $R^5$, $R^6$, $R^{10}$, $R^{11}$, $R^{15}$, $R^{16}$, and $R^{20}$ each independently represent a substituted or unsubstituted alkyl group,
$X^1$, $X^2$, $X^3$, and $X^4$ each independently represent a substituted or unsubstituted alkyl group, a substituted or unsubstituted aryl group, a hydroxyl group, a substituted or unsubstituted alkoxy group, a substituted or unsubstituted aryloxy group, a substituted or unsubstituted heterocyclic oxy group, a substituted or unsubstituted alkylamino group, a substituted or unsubstituted arylamino group, a substituted or unsubstituted heterylamino group, a substituted or unsubstituted acylamino group, a substituted or unsubstituted acyloxy group, a substituted or unsubstituted alkylsulfonyl group, a substituted or unsubstituted arylsulfonyl group, a substituted or unsubstituted aminocarbonyloxy group, a substituted or unsubstituted alkylsulfonylamino group, a substituted or unsubstituted arylsulfonylamino group, a substituted or unsubstituted ureido group, a substituted or unsubstituted acyl group, a carboxyl group, a substituted or unsubstituted carbamoyl group, a substituted or unsubstituted alkoxycarbonyl group, a substituted or unsubstituted aryloxycarbonyl group, a substituted or unsubstituted sulfamoyl group, a mercapto group, a substituted or unsubstituted alkylthio group, a substituted or unsubstituted arylthio group, a substituted or unsubstituted alkoxycarbonylamino group, or a substituted or unsubstituted aryloxycarbonylamino group,
$R^{a1}$ and $R^{a2}$ each independently represent a monovalent substituent,
$n^{a1}$ and $n^{a2}$ each independently represent an integer of 0 to 4, and
in a case where $n^{a1}$ and $n^{a2}$ each independently represent an integer of 2 or more, plural $R^{a1}$'s and $R^{a2}$'s may be the same as or different from each other, and
in Formula (X), D represents a residue obtained by removing four hydrogen atoms from the compound represented by Formula (1) or (2),
M represents a hydrogen atom or a counter cation, and
M's may be the same as or different from each other.

**2.** The coloring composition for dyeing or textile printing according to claim 1,

wherein the compound represented by Formula (1) or (2) is a compound represented by the following Formula (3) or (4),

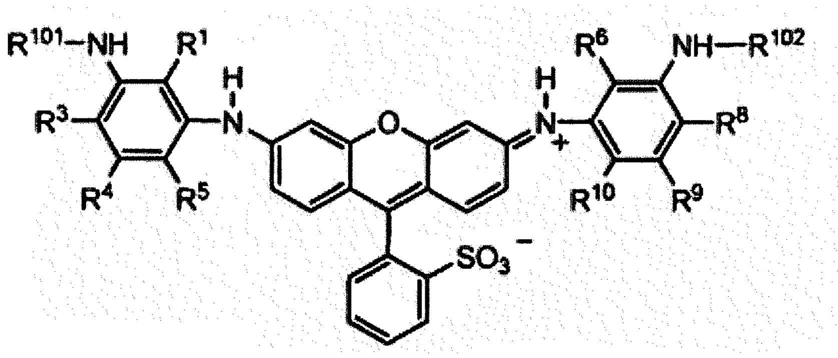

(3)

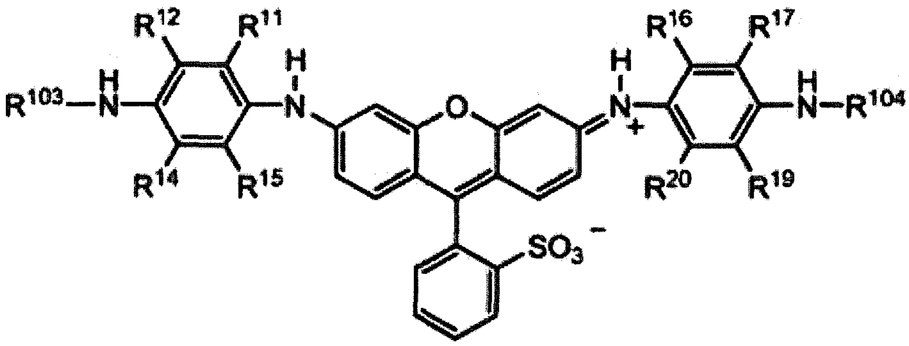

(4)

in Formula (3) or (4), $R^3$, $R^4$, $R^8$, $R^9$, $R^{12}$, $R^{14}$, $R^{17}$, and $R^{19}$ each independently represent a hydrogen atom or a substituent,

$R^1$, $R^5$, $R^6$, $R^{10}$, $R^{11}$, $R^{15}$, $R^{16}$, and $R^{20}$ each independently represent a substituted or unsubstituted alkyl group, and

$R^{101}$, $R^{102}$, $R^{103}$, and $R^{104}$ each independently represent a substituted or unsubstituted alkyl group, a substituted or unsubstituted aryl group, a substituted or unsubstituted heterocyclic group, a substituted or unsubstituted alkylcarbonyl group, a substituted or unsubstituted arylcarbonyl group, a substituted or unsubstituted alkylsulfonyl group, a substituted or unsubstituted arylsulfonyl group, a substituted or unsubstituted alkoxycarbonyl group, a substituted or unsubstituted aryloxycarbonyl group, a substituted or unsubstituted carbamoyl group, a substituted or unsubstituted monoalkylaminocarbonyl group, a substituted or unsubstituted dialkylaminocarbonyl group, a substituted or unsubstituted monoarylaminocarbonyl group, a substituted or unsubstituted diarylaminocarbonyl group, or a substituted or unsubstituted alkylarylaminocarbonyl group.

**3.** The coloring composition for dyeing or textile printing according to claim 2,

wherein the compound represented by Formula (3) or (4) is a compound represented by the following Formula (5) or (6),

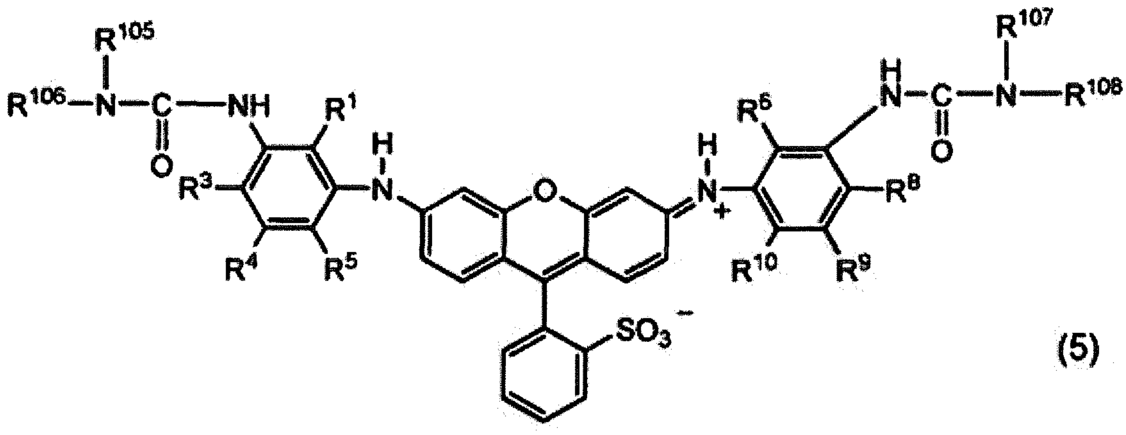

(5)

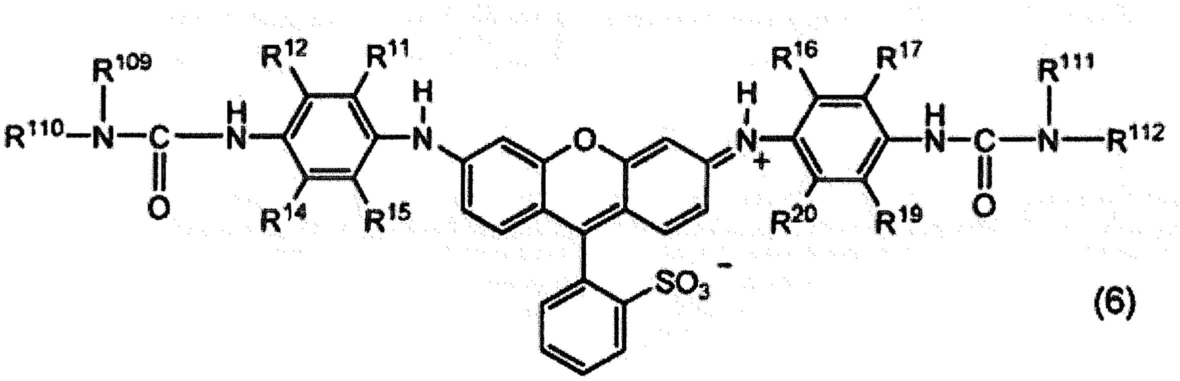

(6)

in Formula (5) or (6), $R^1$, $R^5$, $R^6$, $R^{10}$, $R^{11}$, $R^{15}$, $R^{16}$, and $R^{20}$ each independently represent a substituted or unsubstituted alkyl group, and
$R^3$, $R^4$, $R^8$, $R^9$, $R^{12}$, $R^{14}$, $R^{17}$, $R^{19}$, $R^{105}$, $R^{106}$, IO? $R^{108}$, $R^{109}$, $R^{110}$, $R^{111}$, and $R^{112}$ each independently represent a hydrogen atom or a substituent.

**4.** The coloring composition for dyeing or textile printing according to any one of claims 1 to 3,

wherein $R^4$ and $R^9$ each independently represent a sulfo group.

**5.** The coloring composition for dyeing or textile printing according to any one of claims 1 to 4,

wherein $R^3$ and $R^8$ each independently represent an alkyl group having 1 to 6 carbon atoms.

**6.** A textile printing method comprising the following steps (1) to (4):

(1) a step of adjusting a color paste by adding the coloring composition for dyeing or textile printing according to any one of claim 1 to 5 to a solution including at least a polymer compound and water;
(2) a step of printing the color paste of (1) on fabric;
(3) a step of applying steam to the printed fabric; and
(4) a step of washing the printed fabric with water and drying the washed fabric.

**7.** A textile printing method comprising the following steps (11) to (14):

(11) a step of applying a paste including at least a polymer compound and water to fabric;
(12) a step of printing the coloring composition for dyeing or textile printing according to any one of claims 1 to 5 on the fabric using an ink jet method;
(13) a step of applying steam to the printed fabric; and
(14) a step of washing the printed fabric with water and drying the washed fabric.

**8.** The textile printing method according to claim 6 or 7,

wherein the fabric includes polyamide.

**9.** An ink for ink jet textile printing comprising the coloring composition for dyeing or textile printing according to any one of claims 1 to 5.

**10.** A method of printing on fabric using the ink for ink jet textile printing according to claim 9 with an ink jet method.

**11.** A fabric which is dyed or printed using the coloring composition for dyeing or textile printing according to any one of claims 1 to 5.

**12.** A fabric which is printed using the method according to claim 10.

## INTERNATIONAL SEARCH REPORT

International application No.
PCT/JP2015/068216

A. CLASSIFICATION OF SUBJECT MATTER
*C09B11/28*(2006.01)i, *C09D11/328*(2014.01)i, *D06P1/00*(2006.01)i, *D06P1/46*(2006.01)i, *D06P1/52*(2006.01)i, *D06P5/00*(2006.01)i, *D06P5/20*(2006.01)i, *B41J2/01*(2006.01)n

According to International Patent Classification (IPC) or to both national classification and IPC

B. FIELDS SEARCHED

Minimum documentation searched (classification system followed by classification symbols)
C09B11/28, C09D11/328, D06P1/00, D06P1/46, D06P1/52, D06P5/00, D06P5/20, B41J2/01

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2013-249339 A (Fujifilm Corp.), 12 December 2013 (12.12.2013), paragraph [0119]; examples 8, 16 & US 2013/0321521 A1 & EP 2669337 A1 | 1,2,4-12<br>1,2,4-12<br>3 |
| Y<br>A | WO 2013/146218 A1 (Nippon Kayaku Co., Ltd.), 03 October 2013 (03.10.2013), paragraphs [0002], [0009], [0026], [0050]; examples; claims & TW 201343797 A | 1,2,4-12<br>3 |
| Y<br>A | WO 2013/089197 A1 (Nippon Kayaku Co., Ltd.), 20 June 2013 (20.06.2013), paragraphs [0002], [0008], [0027], [0054] & JP 2013-889197 A & TW 201331191 A | 1,2,4-12<br>3 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27 August 2015 (27.08.15) | 08 September 2015 (08.09.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No.
PCT/JP2015/068216

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2012-207224 A (Canon Inc.), 25 October 2012 (25.10.2012), paragraph [0137] & US 2014/0005417 A1 & WO 2012/124792 A1 & EP 2686384 A1 | 1,2,4-12<br>3 |
| E,X | WO 2015/105108 A1 (Fujifilm Corp.), 16 July 2015 (16.07.2015), paragraphs [0070] to [0083], [0134]; examples; claims (Family: none) | 1-12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4750981 B
- JP 11029714 A
- JP H11029714 A
- JP 2939908 B
- JP 2002348502 A
- JP 5451556 B
- JP 2011148973 A
- JP 2014005462 A
- JP 6166969 A
- JP H06166969 A
- US 5336443 A
- JP 7316991 A
- JP H07316991 A
- JP 2013209786 A
- JP 2002371079 A
- JP 2008266466 A
- JP 19992693929 A
- JP H112693929 A
- WO 10109867 A
- JP 6057644 A
- JP H0657644 A
- JP 2002339268 A
- JP 2000054277 A
- JP 7150482 A
- JP H07150482 A
- JP 2008174865 A
- JP 2012154006 A
- JP 2012012730 A
- JP 2068372 A
- JP H0268372 A
- JP 63031594 B
- JP S6331594 B
- JP 2002275769 A
- JP 2001081680 A
- JP 2004068208 A
- JP 11043873 A
- JP H1143873 A
- JP 2007217829 A
- JP 2006083495 A
- JP 2005154936 A
- JP 2002105875 A
- JP 2002348786 A
- JP 11081163 A
- JP H1181163 A
- JP 2061183 A
- JP H0261183 A
- JP 2001295186 A
- JP 2004060073 A
- JP 2003113583 A
- JP 8100379 A
- JP H08100379 A
- JP 2053976 A
- JP H0253976 A
- JP 2000226781 A
- JP 2004292989 A
- JP 2002249991 A
- JP 2002363872 A
- JP 6341070 A
- JP H06341070 A
- JP 2004197237 A
- JP 2008223192 A
- JP 2011179130 A
- JP 62257464 A
- JP S62257464 A
- JP 2047378 A
- JP H0247378 A
- JP 60094678 A
- JP S6094678 A
- JP 2002266236 A
- JP 2007321247 A
- JP 3287873 A
- JP H03287873 A
- JP 2004131919 A
- JP 9296379 A
- JP H09296379 A
- JP 7070953 A
- JP H0770953 A
- JP 7197384 A
- JP H07197384 A
- JP 7070950 A
- JP H0770950 A
- JP 3104977 A
- JP H03104977 A
- JP 2007303046 A
- JP 2007313717 A
- JP 2008248437 A
- JP 3045774 A
- JP H0345774 A
- JP 2001277656 A
- JP 2000290882 A
- JP 2001018390 A
- JP 2010083040 A
- JP 2011031418 A
- JP 2008202210 A
- JP 2006322131 A
- JP 2007100270 A
- JP 2014129598 A

**Non-patent literature cited in the description**


- Dyeing Note. Shikisensha Co., Ltd, vol. 24, 33-121, 124-130
- *Dyeing Note,* 134-145
- *Dyeing Note,* 147-154
- *Dyeing Note,* 216-222
- *Dyeing Note,* 230-255
- *Dyeing Note,* 285, , 286
- *Dyeing Note,* 279-284
- *Dyeing Note,* 304-321
- *Dyeing Note,* 322-334
- *Dyeing Note,* 349-361
- *Dyeing Note,* 367-369
- *Dyeing Note,* 336-338
- *Dyeing Note,* 339-345
- *Dyeing Note,* 346-348
- *Dyeing Note,* 370-374
- *Dyeing Note,* 375-381
- *Dyeing Note,* 362-363
- *Dyeing Note,* 426-429
- *Dyeing Note,* 223-255